# EUROPÄISCHE PATENTANMELDUNG

(11) **EP 2 093 278 A1**
(43) Veröffentlichungstag der Anmeldung: **26.08.2009**
(21) Anmeldenummer: 09151694.8
(22) Anmeldetag: 30.01.2009
(51) Int. Cl.: C11D 1/65, C11D 1/82, C11D 1/86, C11D 11/00

(54) **Performance-Additive zur Verbesserung der Benetzungseigenschaften von ionischen Flüssigkeiten auf festen Oberflächen**

(30) Priorität: 05.02.2008 DE 102008007745
(71) Anmelder: Evonik Goldschmidt GmbH, 45127 Essen (DE)
(72) Erfinder: Schwab, Peter, 45133, Essen (DE); Kempka, Stefan, 45357, Essen (DE); Seiler, Matthias, 64347, Griesheim (DE); Glöckler, Bernd, 63457, Hanau (DE)

(57) **Zusammenfassung**

Zusammensetzung enthaltend mindestens eine ionische Flüssigkeit und mindestens ein Performanceadditiv und gegebenenfalls ein Lösungsmittel und/oder weitere sonstige Hilfs- oder Zusatzstoffe und deren Verwendung als Benetzungsmittel für feste Oberflächen.

## Beschreibung

Die Erfindung betrifft die Verbesserung der Benetzungseigenschaften von ionischen Flüssigkeiten auf festen Oberflächen.

### Stand der Technik:

Ionische Flüssigkeiten werden für zahlreiche Anwendungen eingesetzt und vorgeschlagen, bei denen die Benetzung von festen Oberflächen eine wichtige Rolle spielt. Beispiele für solche Anwendungen sind der Einsatz als Schmiermittel und in Trennprozessen, insbesondere destillativen Trennprozessen. Oftmals zeigen ionische Flüssigkeiten ein nicht ausreichendes Benetzungs- und Spreitungsverhalten und erweisen sich somit trotz hervorragender Eigenschaftsprofile aufgrund dieses Schwachpunktes als ungeeignet.

### Aufgabenstellung:

Aufgabe der Erfindung ist es daher, das Benetzungs- und Spreitungsverhalten von ionischen Flüssigkeiten effektiv zu steuern und somit für Anwendungen bei denen feste Oberflächen benetzt werden müssen, universell und dauerhaft einsetzbar zu machen. Die richtigen Benetzungseigenschaften der Flüssigkeiten können die Performance in der Anwendung entscheidend verbessern.

Im Unterschied zu Reinigungsmitteln, die tensidisch die (kurzzeitige, während des Reinigungsprozesses bestehende) Benetzung einer Oberfläche begünstigen, ist die Spreitung nicht unbedingt ein Vorteil in Bezug auf Reinigung.

Zudem findet bei Reinigungsanwendungen nur ein kurzzeitiger Kontakt mit der zu reinigenden Oberfläche statt, während bei den erfindungsgegenständlichen Anwendungen eine dauerhafte oder periodisch wiederkehrende, regelmäßige Anwendung auf der Oberfläche erfolgt Beispielsweise findet bei einer Anwendung in einem Getriebe zu mindestens 95 % der Nutzungsdauer des Getriebes eine Benetzung mit ionischen Flüssigkeit statt; umgekehrt ist beispielsweise eine periodische Anwendung gegeben, wenn in einem Fallfilmdestillationsprozess die Wärmetauscherfläche wiederkehrend dünn mit der ionischen Flüssigkeit benetzt wird, was zu der spreitenden Wirkung der ionischen Flüssigkeit führt und damit zu der erfindungsgegenständlichen vorteilhaften Wirkung beiträgt.

Dadurch wird ausdrücklich verdeutlicht, dass nicht eine kurzzeitige rinse-**off Applikation** erfindungsgegenständlich ist, sondern möglichst langandauernde eine leave-on-Anwendung. Insgesamt soll die Oberfläche immer, oder doch zumindest meistens von der ionischen Flüssigkeit benetzt sein und bleiben und nicht wie bei Reinigungsanwendungen nur kurzzeitig zu einer Senkung der Oberflächenspannung führen.

**Bei den nicht erfindu**ngsgegenständlichen Reinigungsanwendungen ist regelmäßig die Wasser- oder Lösungsmittelkonzentration neben der ionischen Flüssigkeit von Bedeutung.

Im der vorliegenden Erfindung ist aber die ionische Flüssigkeit selbst in möglichst hoher Konzentration anwesend und soll durch ein Performance-Additiv in ihrer Wirkung in Bezug auf beispielsweise Schmierung optimiert werden.

Die erfindungsgemäßen Zusammensetzungen enthalten 50 bis 99,999 Gew.-%, bevorzugt 80 bis 99,999 Gew.-%, insbesondere mindestens 95 Gew.-% und besonders bevorzugt mehr als 98 bis 99,999 Gew.-% einer oder mehrerer ionischen Flüssigkeiten,
sowie 0 bis 20 Gew.-%, bevorzugt 0 bis 10 Gew.-% und besonders bevorzugt 0 bis 5 Gew.-% Lösungsmittel,
sowie 0 bis 20 Gew.-%, bevorzugt 0 bis 10 Gew.-% und besonders bevorzugt 0 bis 5 Gew.-% an Hilfs- und Zusatzstoffen,
sowie 0,001 bis 10 Gew.-%, bevorzugt 0,001 bis 5 Gew.-% und besonders bevorzugt 0,05 bis 1 Gew.-% eines oder mehrerer erfindungsgemäßer Performanceadditive,
wobei sich die Summe aller Komponenten der Zusammensetzung auf 100 Gew.-% addiert.

Bei den erfindungsgemäßen Performance Additiven ist es von Vorteil wenn hohe Spreitung mit guter Benetzung einhergeht. Betont sei dies noch einmal im Unterschied zu nicht erfindungsgegenständlichen Reinigungsmitteln, die eine hohe Benetzung erfordern, nicht aber zusätzlich eine gute Spreitung bieten. Bei reinen ionischen Flüssigkeiten, die als Schmierstoffe Verwendung finden sollen, ist die Filmbildung auf der zu schmierenden Oberfläche von entscheidender Bedeutung. Ist die Spreitung zudem sehr hoch, erfolgt die Benetzung der Oberfläche unter Ausbildung eines sehr dünnen Films. Dadurch kann die notwendige Konzentration des Benetzungs- und Spreitungsmittels reduziert werden und Kosten eingespart werden. Auch bei destillativen Trennprozessen ist die Benetzung und Spreitung der Destillationsguts auf der Verdampferoberfläche von entscheidender Bedeutung. Wird die Benetzung/Spreitung verbessert, so ist der Flüssigkeitsfilm auf der Verdampferoberfläche dünner ausgebildet und der Durchsatz kann gesteigert werden.

Als ionische Flüssigkeiten ("ionic liquids") bezeichnet man allgemein bei niedrigen Temperaturen (< 100 °C) schmelzende Salze, die eine neuartige Klasse von Flüssigkeiten ausschließlich aus Ionen aufgebaut, darstellen. Im Gegensatz zu klassischen Salzschmelzen, die hochschmelzende, hochviskose und sehr korrosive Medien darstellen, sind ionische Flüssigkeiten bereits bei niedrigen Temperaturen flüssig und relativ niedrig viskos (K.R. Seddon J. Chem. Technol. Biotechnol. 1997, 68, 351-356).

Überraschenderweise wurde nun gefunden, dass Additive, welche ursprünglich ausschließlich in wässrigen Systemen angewendet werden, die Aufgabe lösen.

Ionische Flüssigkeiten im Sinne der vorliegenden Erfindungen sind Salze der nachfolgend aufgeführten allgemeinen Formeln I, II, oder III: $

[A]ₙ⁺ [Y]ⁿ⁻ (I)

in der n für 1, 2, 3 oder 4 steht, [A]⁺ für ein quartäres Ammonium-Kation, ein Oxonium-Kation, ein Sulfonium-Kation oder ein Phosphonium-Kation und [Y]ⁿ⁻ für ein ein-, zwei-, drei- oder vierwertiges Anion steht; oder gemischte Salze der allgemeinen Formeln (II)

[A¹⁺][A²]⁺[Y]²⁻ (IIa);

[A¹⁺][A²]⁺[A³]⁺[Y]³⁻ (IIb);

oder

[A¹⁺[A²]⁺[A³][A⁴]⁺[Y]⁴⁻ (IIc);

wobei [A¹]⁺, [A²]⁺ [A³]⁺ und [A⁴]⁺ unabhängig voneinander aus den für [A]⁺ genannten Gruppen ausgewählt sind und [Y]ⁿ⁻ die für Formel (I) genannte Bedeutung besitzt; oder gemischte Salze der allgemeinen Formeln (III)

[A¹⁺[A²]⁺[A³[M¹]⁺[Y⁴⁻] (IIIa);

[A¹⁺[A²][M²]⁺[Y⁴⁻] (IIIb);

[A¹⁺[M¹]⁺[M²]⁺[Y⁴⁻ (IIIc);

[A¹⁺[A²]⁺[M¹]⁺[Y³⁻ (IIId);

[A¹[M¹]⁺[M²]⁺[Y³⁻ (IIIe);

[A¹[M¹]⁺[Y²⁻ (IIIf);

[A¹⁺[A²][M²]⁺[Y⁴⁻] (IIIg);

[A¹[M¹][M⁴]²⁺[Y⁴⁻] (IIIh);

[A¹[M⁵]³⁺[Y⁴⁻] (IIIi);

oder

[A¹[M⁴]²⁺[Y³⁻] (IIIj);

wobei [A¹]⁺, [A²]⁺ und [A³]⁺ unabhängig voneinander aus den für [A]⁺ genannten Gruppen ausgewählt sind, [Y]ⁿ⁻ die für Formel (I) genannte Bedeutung besitzt und [M¹]⁺, [M²]⁺, [M³]⁺ einwertige Metallkationen, [M⁴]2⁺ zweiwertige Metallkationen und [M⁵]³⁺ dreiwertige Metallkationen bedeuten;
oder Gemische aus allen Formeln (I) bis (III).

Ionische Flüssigkeiten bestehen beispielsweise aus Anionen wie zum Beispiel Halogeniden, Carboxylaten, Phosphaten, Thiocyanaten, Isothiocyanaten, Dicyanamiden, Sulfaten, Alkylsulfaten, Sulfonaten, Alkylsulfonaten, Tetrafluoroborat, Hexafluoro-phosphat oder auch Bis(trifluormethylsulfonyl)imid kombiniert mit zum Beispiel substituierten Ammonium-, Phosphonium-, Pyridinium- oder Imidazolium-Kationen, wobei die vorgenannten Anionen und Kationen eine kleine Auswahl aus der großen Zahl möglicher Anionen und Kationen darstellen und damit kein Anspruch auf Vollständigkeit erhoben oder gar eine Einschränkung vorgegeben werden soll.

Die erfindungsgemäß verwendeten ionischen Flüssigkeiten setzen sich bevorzugt aus mindestens einer quartären Stickstoff- und/oder Phosphorverbindung und/oder Schwefelverbindung und mindestens einem Anion zusammen und ihr Schmelzpunkt liegt unterhalb ca. + 250 °C, vorzugsweise unterhalb ca. + 150 °C, insbesondere unterhalb ca. + 100 °C. Besonders bevorzugt sind die erfindungsgemäß verwendeten ionischen Flüssigkeiten oder ihre Mischungen bei Raumtemperatur flüssig.

Die im Sinne der Erfindung bevorzugt verwendeten ionischen Flüssigkeiten können beispielsweise aus mindestens eiR¹nem Kation der allgemeinen Formeln bestehen:

R¹R²R³R⁴N⁺ (IV)

R¹R²N⁺+ CR³R⁴ (V)

R¹R²R³R⁴P⁺ (VI)

R¹R²P⁺=CR³R⁴ (VIII)

in denen
R¹,R²,R³,R⁴ gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoff-rest mit 6 bis 40 Kohlenstoffatomen, einen Alkylaryl-rest mit 7 bis 40 Kohlenstoffatomen, einen durch ein oder mehrere Heteroatome (Sauerstoff, NH, NR' mit R' gleich einem gegebenenfalls Doppelbindungen enthal-tenden C₁-C₃₀-Alkylrest, insbesondere -CH₃) unter-brochenen linearen oder verzweigten gegebenenfalls Doppelbindungen enthaltenden aliphatischen Kohlen-wasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O₂)-O-, -0-S(O₂)-, -S(O₂)-NH-, -NH-S(O₂)-, -S(O₂)-N(CH₃)-, -N (CH₃)-S (O₂) -, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', NH₂, N(H)R', N(R')₂, bei denen R' gleich einem gegebenenfalls Doppelbindungen enthaltenden C₁-C₃₀-Alkylrest ist, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -(R⁵-O)ₙ-R⁶ bedeuten,
wobei
R⁵ ein 2 bis 4 Kohlenstoffatome enthaltender linearer oder verzweigter Kohlenwasserstoffrest,
n 1 bis 100, vorzugsweise 2 bis 60, ist und
R⁶ Wasserstoff, einen linearen oder verzweigten gegebenenfalls Doppelbindungen enthaltenden aliphatischen Kohlenwasserstoffrest mit 1 bis 30
- R⁷: Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -CO)-R⁷ mit gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Bevorzugt werden quarternäre Ammoniumsalze alkoxylierter Fettsäuren - auch als Alkanolaminesterquats bezeichnet - gekennzeichnet durch die generische Formel des Typs R¹R²R³R⁴N⁺ A⁻ (IV) in denen R¹ ein Alkylrest mit 1 bis 20 Kohlenstoffatomen, R² ein Alkylrest mit 1 bis 4 Kohlenstoffatomen, R³ ein Rest (CH₂CHRO)ₙ-H mit n von 1 bis 200 und R gleich H oder CH₃, R⁴ ein Alkylrest mit 1 bis 4 Kohlenstoffatomen oder ein Rest (CH₂CHRO)ₙ-H mit n von 1 bis 200 und R gleich H oder CH₃ und A⁻ ein einwertiges Anion ist.

Bei diesen Verbindungen sind Substanzen der Formel

(IX) R⁶₄₋ₘN⁺[((CH₂)ₙ-Q-R⁷]ₘX⁻

bevorzugt, wobei: jeder Rest R⁶ unabhängig voneinander ein Alkylgruppe oder Hydroxyalkylgruppe mit 1 bis 6 Kohlenstoffatomen, oder eine Benzylgruppe, und vorzugsweise eine Methylgruppe ist; R⁷ ist unabhängig voneinander Wasserstoff, eine lineare oder verzweigte Alkylgruppe mit 11 bis 22 Kohlenstoffatomen, eine lineare oder verzweigte Alkenylgruppe mit 11 bis 22 Kohlenstoffatomen, mit der Bedingung dass mindestens ein Rest R⁷ nicht Wasserstoff ist;
Q ist unabhängig ausgewählt aus den Gruppen der Formeln -O-C 0)-, -C(O)O, -NR⁸-C(O)-, -C(O)-NR⁸-, -0-C(O)-O, - CHR⁹-O-C(O)- oder -CH(OCOR⁷)-CH₂-O-C(O)-, wobei R⁸ Wasserstoff, Methyl, Ethyl, Propyl- oder Butylrest ist und R⁹ ist Wasserstoff oder Methyl ist und vorzugsweise Q ist -0-C(O)- oder -NH-C(O)-; m ist gleich 1 bis 4 und vorzugsweise 2 oder 3; n ist gleich 1 bis 4 und vorzugsweise 2; und X ein mit Weichmachern kompatibles Anion, z.B. Chlorid, Bromid, Methylsulfat, Ethylsulfat, Sulfat oder Nitrat, vorzugsweise Chlorid oder MethylSulfat. Die quaternäre Ammonium-Verbindungen kann Gemische der Verbindungen mit unterschiedlichen Gruppen R⁷ enthalten die nicht gleich Wasserstoff sind, deren Wert von 1 bis zu m reicht. Vorzugsweise umfassen solche Gemische auf Durchschnitt von 1.2 bis 2.5 Gruppen R⁷, die nicht Wasserstoff sind. Vorzugsweise liegt der Anteil der Nicht-Wasserstoffgruppen R⁷ bei 1.4 bis 2.0 und bevorzugt bei 1.6 bis 1.9.
Die bevorzugten quarternären Ammoniumverbindungen sind die Verbindungen des Typs:

R⁶N⁺[CH₂CHR⁹OH-] [CH₂CHR⁹OC (O) R⁷]₂ X⁻ (X)

R⁶N⁺[CH₂CHR⁹OC (O) R⁷]₂ X⁻ (XI)

⁶N⁺[CH₂CHR⁹OH-] [CH₂CH₂NHC (O) R⁷]₂ X⁻ (XII)

wobei R⁶, R⁷ und X die gleiche Bedeutung haben wie oben für Formel (i) definiert, mit der Bedingung dass R⁷ nicht Wasserstoff ist.
Vorzugsweise ist das Fragment -C(O)R⁷ eine fetthaltige Acylgruppe. Verwendbare fetthaltige Acylgruppen werden von den natürlichen Quellen der Triglyzeride, vorzugsweise Talg, pflanzliche öle, teilweise hydrierter Talg und teilweise hydrierte pflanzliche öle abgeleitet. Verwendbare Quellen der Triglyzeride sind Sojabohnenöl, Talg, partiell hydrierter Talg, Palmöl, Palmekerne, Rapssamen, Schweinefett, Kokosnuss, Raps, Distelöl, Mais, Reis und Tallöl und Mischungen dieser Komponenten.
Dem Fachmann ist bekannt, dass die Zusammensetzung der Fettsäurehaltigen Verbindungen gewiessen natürlichen Schwankungen unterworfen ist, abhängig von Erntegut zu Erntegut oder von der Vielzahl der pflanzlichen Ölquellen. Die R⁷-Gruppen sind gewöhnlich Gemische der linearen und verzweigten Kohlenstoffketten der gesättigten und ungesättigten aliphatischen Fettsäuren.
Der Anteil der ungesättigten Gruppen R⁷ in solchen Gemischen beträgt vorzugsweise mindestens 10%, besonders bevorzugt mindestens 25% und ganz besonders bevorzugt 40% bis 70%. Der Anteil der mehrfach ungesättigten Gruppen R⁷ in solchen Gemischen beträgt weniger als 10%, vorzugsweise weniger als 5% und besonders bevorzugt weniger als 3%. Wenn erforderlich kann Teilhydrierung durchgeführt werden, um die den gesättigten Charakter anzuheben und damit die Stabilität (z.B., Geruch, Farbe, etc.) des Endprodukts zu verbessern. Das Gehalt ungesättigter Anteile, ausgedrückt durch den Jodzahl, sollte in einem Bereich von 5 bis 150 und vorzugsweise in einem Bereich von bevorzugt 5 bis 50 liegen. Das Verhältnis von cis- und trans-Isomeren der Doppelbindungen in den ungesättigten Gruppen R⁷ ist vorzugsweise größer als 1: 1 und besonders bevorzugt im Bereich von 4 zu 1 bis 50 zu 1.
Bevorzugte Beispiele der Verbindungen von Formel (IX) sind:
N,N-Di(tallowyloxyethyl)-N,N-dimethylammonium-chlorid;
N,N-Di(canolyloxyethyl)-N,N-dimethylammonium-chlorid;
N,N-Di(tallowyloxyethyl)-N-methyl,N-(2-hydroxyethyl)ammonium-methylsulfat;
N,N-Di(canolyloxyethyl)-N-methyl,N-(2-hydroxyethyl) ammonium-methylsulfat;
N,N-Di(tallowylamidoethyl)-N-methyl,N-(2-hydroxyethyl) ammonium-methylsulfat;
N,N-Di(2-tallowyloxy-2-oxo-ethyl)-N,N-dimethylammonium-chlorid;
N,N-Di(2-canolyloxy-2-oxo-ethyl)-N,N-dimethylammonium-chlorid;
N,N-Di(2-tallowyloxyethylcarbonyloxyethyl)-N,N-dimethylammonium-chlorid;
N,N-Di(2-canolyloxyethylcarbonyloxyethyl)-N,N-dimethylammonium-chlorid;
N(2-tallowoyloxy-2-ethyl)-N-(2-tallowyloxy-2-oxo-ethyl)-N,N-dimethylammonium-chlorid;
N(2-canolyloxy-2-ethyl)-N(2-canolyloxy-2-oxo-ethyl)-N,N-dimethylammonium-chlorid;
N,N,N-Tri(tallowyloxyäthyl)-N-methylammonium-chlorid;
N,N,N-Tri(canolyloxyäthyl)-N-methylammonium-chlorid;
1,2-Ditallowyloxy-3-N,N,N-trimethylammoniumpropyl-chlorid; und
1,2-Dicanolyloxy-3-N,N,N-trimethylammoniumpropyl-chlorid.

Weiterhin bevorzugte quarternäre Ammoniumsalze sind Ditallowdimethylammonium-chlorid, Ditallowdimethylammonium-methylsulfat, Dimethylammonium-Chlorid der Di(hydriertes-tallow)distearyldimethylammonium-chlorid und Dibehenyldimethylammonium-chlorid.

Als Kationen kommen ferner Ionen in Betracht, die sich von gesättigten oder ungesättigten cyclischen Verbindungen sowie von aromatischen Verbindungen mit jeweils mindestens einem dreibindigen Stickstoffatom in einem 4- bis 10-, vorzugsweise 5- bis 6-gliedrigen heterocyclischen Ring ableiten, der gegebenenfalls substituiert sein kann. Solche Kationen lassen sich vereinfacht (d. h. ohne Angabe von genauer Lage und Zahl der Doppelbindungen im Molekül) durch die nachstehenden allgemeinen Formeln (XIII), (XIV) und (XV) beschreiben,
wobei die heterocyclischen Ringe gegebenenfalls auch mehrere Hetereoatome enthalten können. 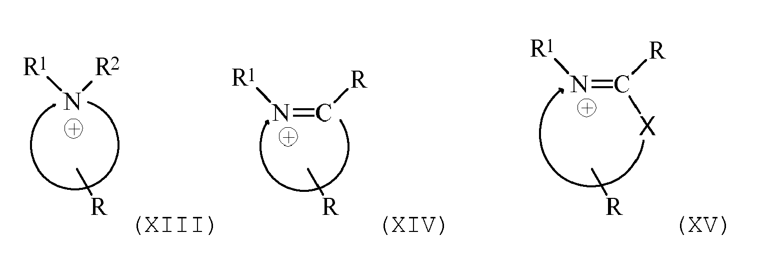
- R¹ und R²: besitzen dabei die vorgenannte Bedeutung,
- R: ist ein Wasserstoff, ein linearer oder verzweigter gegebenenfalls Doppelbindungen enthaltender aliphati scher Kohlenwasserstoffrest mit 1 bis 30 Kohlenstoff atomen, ein cycloaliphatischer gegebenenfalls Doppel bindungen enthaltender Kohlenwasserstoffrest mit 5 bis 40 Kohlenstoffatomen, ein aromatischer Kohlen wasserstoffrest mit 6 bis 40 Kohlenstoffatomen oder ein Alkylarylrest mit 7 bis 40 Kohlenstoffatomen.
- X: ist ein Sauerstoffatom, ein Schwefelatom oder ein substituiertes Stickstoffatom (X = O, S, NR¹).

Beispiele für cyclische Stickstoffverbindungen der vorgenannten Art sind Pyrrolidin, Dihydropyrrol, Pyrrol, Imidazolin, Oxazolin, Oxazol, Thiazolin, Thiazol, Isoxazol, Isothiazol, Indol, Carbazol, Piperidin, Pyridin, die isomeren Picoline und Lutidine, Chinolin und iso-Chinolin. Die cyclischen Stickstoffverbindungen der allgemeinen Formeln (XIII), (XIV) u n d (XV) k ö nnen unsubstituiert (R = H), einfach oder auch mehrfach durch den Rest R substituiert sein, wobei bei einer Mehrfachsubstitution durch R die einzelnen Reste R unterschiedlich sein können.

Als Kationen kommen weiterhin Ionen in Betracht, die sich von gesättigten acyclischen, gesättigten oder ungesättigten cyclischen Verbindungen sowie von aromatischen Verbindungen mit jeweils mehr als einem dreibindigen Stickstoffatom in einem 4- bis 10-, vorzugsweise 5- bis 6-gliedrigen heterocyclischen Ring ableiten. Diese Verbindungen können sowohl an den Kohlenstoffatomen als auch an den Stickstoffatomen substituiert sein. Sie können ferner durch, gegebenenfalls substituierte, Benzolringe und/oder Cyclohexanringe unter Ausbildung mehrkerniger Strukturen anneliert sein. Beispiele für solche Verbindungen sind Pyrazol, 3,5-Dimethylpyrazol, Imidazol, Benzimidazol, N-Methylimidazol, Dihydropyrazol, Pyrazolidin, Pyridazin, Pyrimidin, Pyrazin, 2,3-, 2,5- und 2,6-Dimethylpyrazin, Cimolin, Phthalazin, Chinazolin, Phenazin und Piperazin. Insbesondere vom Imidazol und seinen Alkyl- und Phenylderivaten abgeleitete Kationen haben sich als Bestandteil ionischer Flüssigkeiten bewährt.

Als Kationen kommen ferner Ionen in Betracht, welche zwei Stickstoffatome enthalten und durch die allgemeine Formel (XVI) wiedergegeben sind 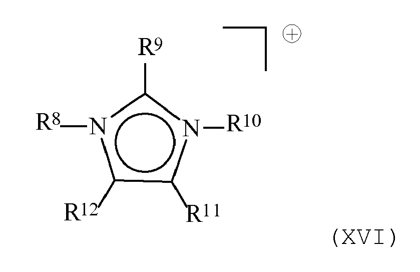 in denen
R⁸,R⁹,R¹⁰,R¹¹,R¹² gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁-C₃₀ Alkylrest), unterbrochenen linearen oder verzweigten gegebenenfalls D oppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S (O₂)-O-, -O-S(O₂)-, -S(O₂)-NH-, -NH-S(O₂)-, -S(O₂)-N(CH₃)-, -N (CH₃)-S(O₂)-, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', NH₂, N(H)R', N(R')₂ mit R' gleich einem gegebenenfalls Doppelbindungen enthaltenden C₁-C₃₀-Alkylrest, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus -(R5-O)ₙ-R⁶ bedeuten,
wobei
- R⁵: ein 2 bis 4 Kohlenstoffatome enthaltender Kohlenwasserstoffrest,
- n: 1 bis 100 ist und
- R⁶: Wasserstoff, einen linearen oder verzweigten gegebenenfalls Doppelbindungen enthaltenden aliphatischen Kohlenwasserstoffrest mit 1 bis 30 Kohlenstoffatomen einen cycloaliphatischen gegebenenfalls Doppelbindungen enthaltenden Kohlenwasserstoffrest mit 5 bis 40 Koh lenstoffatomen, einen aromatischen Kohlenwasser stoffrest mit 6 bis 40 Kohlenstoffatomen, einen Alkylarylrest mit 7 bis 40 Kohlenstoffatomen bedeutet oder ein Rest -C(O)-R⁷ mit
- R⁷: gleich einem linearen oder verzweigten gegebenen falls Doppelbindungen enthaltenden aliphatischen Kohlenwasserstoffrest mit 1 bis 30 Kohlenstoff atomen, einem gegebenenfalls Doppelbindungen ent haltenden cycloaliphatischen Kohlenwasserstoff rest mit 5 bis 40 Kohlenstoffatomen, einem aroma tischen Kohlenwasserstoffrest mit 6 bis 40 Koh lenstoffatomen, einem Alkylarylrest mit 7 bis 40 Kohlenstoffatomen ist.

Als ganz besonders bevorzugte Imidazoliumionen (XII) seien genannt 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethyl-imidazolium, 1-(1-Hexyl)-3-butyl-imidazolium, 1-(1-Octyl)-3-methylimidazolium, 1-(1-Octyl)-3-ethylimidazolium, 1- (1-Octyl) -3-butylimidazolium, 1-(1-Dodecyl)-3-methyl-imidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimi-dazolium, 1-(1-Hexadecyl)-3-methylimidazolium, 1-(1-Hexadecyl)-3-ethylimidazolium, 1-(1-Hexadecyl)-3-butylimidazolium, 1-(1-Hexadecyl)-3-octylimidazolium, 1,2-Dimethyl-imidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1-(1-Octyl)-2,3-di-methylimidazolium, 1,4-Dimethylimidazolium, 1,3,4-Trimethylimidazolium, 1,4-Di-methyl-3-ethylimidazolium, 3-butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium und 1,4,5-Trimethyl-3-octyl-imidazolium.

Als Kationen kommen zudem Ionen in Betracht, die insbesondere zusammengesetzt aus den vorgenannten Kationen aufgrund von Dimerisierung, Trimerisierung oder Polymerisierung Dikationen, Trikationen oder Polykationen bilden.

Hierunter werden auch solche Dikationen, Trikationen und Polykationen zusammengefasst, die ein polymeres Rückgrat beispielsweise auf Basis von Siloxanen, Polyethern, Polyestern, Polyamiden, oder Polyacrylaten besitzen, insbesondere verzweigte und hyperverzweigte Polymere.

Es kommen ferner ionische Flüssigkeiten in Betracht, bei denen das Kation [A]⁺ ein Pyridiniumion (XVIIa) ist, bei dem 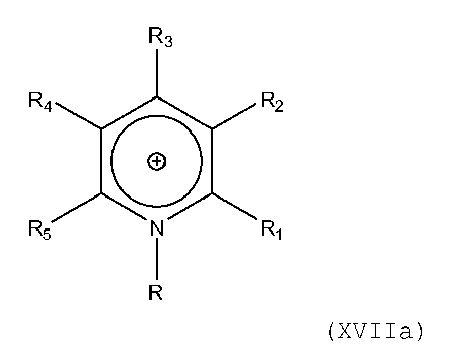
- einer der Reste R₁ bis R₅ Methyl, Ethyl oder Chlor ist und die verbleibenden Reste R₁ bis R₅ Wasserstoff sind;
- R₃ Dimethylamino ist und die verbleibenden Reste R₁, R₂, R₄ und R₅ Wasserstoff sind;
- alle Reste R₁ bis R₅ Wasserstoff sind;
- R₂ Carboxy oder Carboxamid ist und die verbleibenden Reste R₁, R₂, R₄ und R₅ Wasserstoff sind; oder
- R₁ und R₂ oder R₂ und R₃ 1,4-Buta-1,3-dienylen ist und die verbleibenden Reste R₁, R₂, R₄ und R₅ Wasserstoff sind;
   und insbesondere ein solches, bei dem
- R₁ bis R₅ Wasserstoff sind; oder
- einer der Reste R₁ bis R₅ Methyl oder Ethyl ist und die verbleibenden Reste R₁ bis R₅ Wasserstoff sind.

Als ganz besonders bevorzugte Pyridiniumionen (XVIIa) seien genannt 1-Methylpyridinium, 1-Ethylpyridinium, 1-(1-Butyl)pyridinium, 1-(1-Hexyl)pyridinium, 1-(1-Octyl)-pyridinium, 1- (1-Hexyl) -pyridinium, 1- (1-^{Octyl}) -pyridinium, 1-(1-Dodecyl)-pyridinium, 1-(1-Tetradecyl)-pyridinium, 1-(1-Hexadecyl)-pyridinium, 1 ,2-Dimethylpyridinium, 1-Ethyl-2-methylpyridinium, 1-(1-Butyl)-2-methylpyridinium, 1- (1-Hexyl) -2-methyl-pyridinium, 1- (1-^{Octyl})-2-methylpyridinium, 1-(1-Dodecyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethylpyridinium, 1-(1-Hexyl)-2-ethylpyridinium, 1- (1-^{Octyl}) -2-ethylpyridinium, 1-(1-Dodecyl)-2-ethylpyridinium, 1-(1-Tetradecyl)-2-ethylpyridinium, 1-(1-Hexadecyl)-2-ethylpyridinium, 1,2-Dimethyl-5-ethyl-pyridinium, 1,5-Diethyl-2-methyl-pyridinium, 1-(1-Butyl)-2-methyl-3-ethyl-pyridinium, 1-(1-Hexyl)-2-methyl-3-ethyI-pyridinium und 1-(1-Octyl)-2-methyl-3-ethyl-pyridinium, 1-(1-Dodecyl)-2-methyl-3-ethyl-pyridinium, 1-(1-Tetradecyl)-2-methyl-3-ethyl-pyridinium und 1-(1-Hexadecyl)-2-methyl-3-ethyl-pyridinium.

Darüber hinaus kommen ionische Flüssigkeiten in Betracht, bei denen das Kation [A]⁺ ein Pyridaziniumion (XVIIb) ist, bei dem 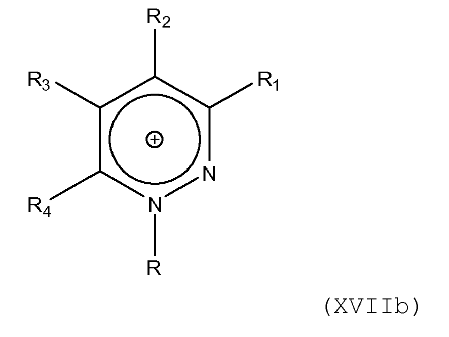
• R₁ bis R₄ Wasserstoff sind; oder
• einer der Reste R₁ bis R₄ Methyl oder Ethyl ist und die verbleibenden Reste R₁ bis R₄ Wasserstoff sind.

Ganz besonders bevorzugt sind zudem ionische Flüssigkeiten, bei denen das Kation [A]⁺ ein Pyrimidiniumionen (XVIIc) ist, bei dem 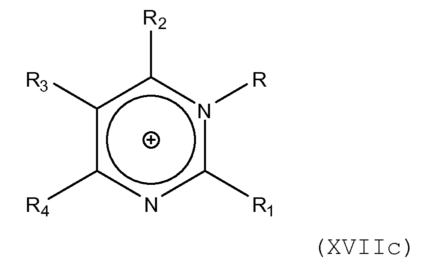
• R₁ Wasserstoff, Methyl oder Ethyl ist und R₂ bis R₄ unabhängig voneinander Wasserstoff oder Methyl sind; oder
• R₁ Wasserstoff, Methyl oder Ethyl ist, R₂ und R₄ Methyl sind und R₃ Wasserstoff ist.

In Betracht kommen außerdem ionische Flüssigkeiten, bei denen das Kation [A]⁺ ein Pyraziniumionen (XVIId) ist, bei dem 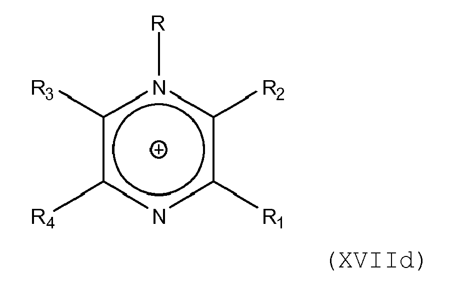
• R₁ Wasserstoff, Methyl oder Ethyl ist und R₂ bis R₄ unabhängig voneinander Wasserstoff oder Methyl sind;
• R₁ Wasserstoff, Methyl oder Ethyl ist, R₂ und R₄ Methyl sind und R₃ Wasserstoff ist;
• R₁ bis R₄ Methyl sind; oder
• R₁ bis R₄ Methyl oder Wasserstoff sind.

In Betracht kommen weiterhin ionische Flüssigkeiten, bei denen das Kation [A]⁺ ein Pyrazoliumion (XVIIf), (XVIIg) beziehungsweise (XVIIg') ist, bei dem 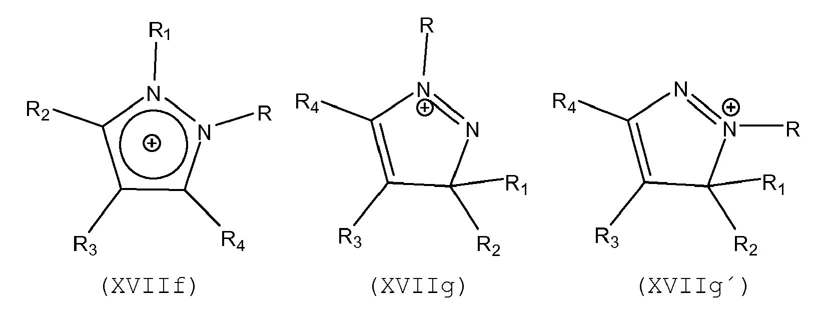
R¹ Wasserstoff, Methyl oder Ethyl ist und R² bis R⁴ unabhängig voneinander Wasserstoff oder Methyl sind.

In Betracht kommen darüber hinaus ionische Flüssigkeiten, bei denen das Kation [A]⁺ ein Pyrazoliumion (XVIIh)ist, bei dem 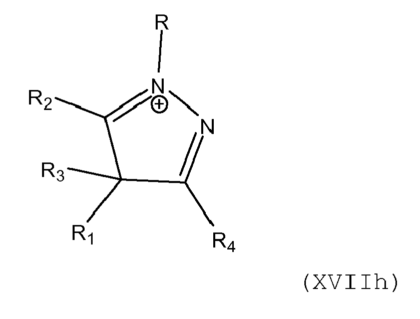
• R¹ bis R⁴ unabhängig voneinander Wasserstoff oder Methyl sind.

In Betracht kommen zudem ionische Flüssigkeiten, bei denen das Kation [A]⁺ ein 1-Pyrazoliniumion (XVIIi) ist, bei dem 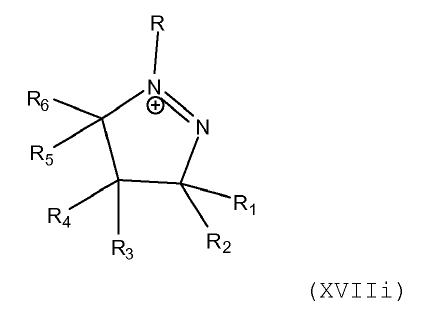
• unabhängig voneinander R₁ bis R₆ Wasserstoff oder Methyl sind.

In Betracht kommen weiterhin ionische Flüssigkeiten, bei denen das Kation [A]⁺ ein 2-Pyrazoliniumion (XVIIj) ist, bei dem 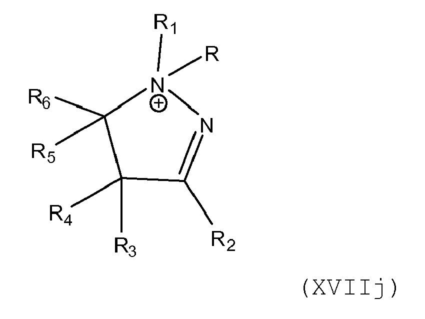
• R₁ Wasserstoff, Methyl, Ethyl oder Phenyl ist und R₂ bis R₆ unabhängig voneinander Wasserstoff oder Methyl sind.

In Betracht kommen auch ionische Flüssigkeiten, bei denen das Kation [A]⁺ ein 3-Pyrazoliniumion (XVIIk) beziehungsweise (XVIIk') ist, bei dem 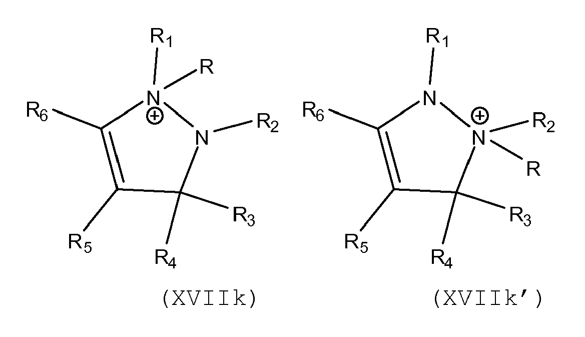
• R₁ und R₂ unabhängig voneinander Wasserstoff, Methyl, Ethyl oder Phenyl sind und R₃ bis R₆ unabhängig voneinander Wasserstoff oder Methyl sind.

In Betracht kommen daneben ionische Flüssigkeiten, bei denen das Kation [A]⁺ ein Imidazoliniumion (XVIIl) ist, bei dem 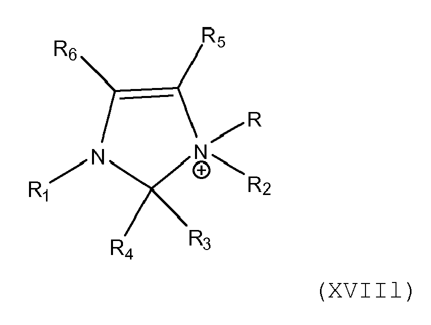
• R für H oder Methyl steht, R₁ und R₂ unabhängig voneinander Wasserstoff, Methyl oder Ethyl, oder ein linearer gesättigter oder ungesättigter Acylrest mit 14 bis 22, vorzugsweise 16 bis 18 Kohlenstoffatomen sind und R₃ bis R₆ unabhängig voneinander für Wasserstoff, einen linearen gesättigten, gegebenenfalls OH-Gruppen enthaltenden Alkylrest mit 1-4 Kohlenstoffatomen stehen, bevorzugt Methyl oder ein Fettsäurerest ist,; insbesondere bevorzugt sind R₁ und R₂ Fettsäureacylreste, sowie R oder R₂ und R₃ Fettsäureacylreste. Von besonderer Bedeutung sind die Substanzen entsprechend Formel (XVIIm). Teilweise sind in der Literatur hierfür auch irreführende Formeln (analog Formel XVIIm' oder XVIIl) eingeführt.

In Betracht kommen außerdem ionische Flüssigkeiten, bei denen das Kation [A]⁺ ein Imidazoliniumion (XVIIm) beziehungsweise (XVIIm') ist, bei dem 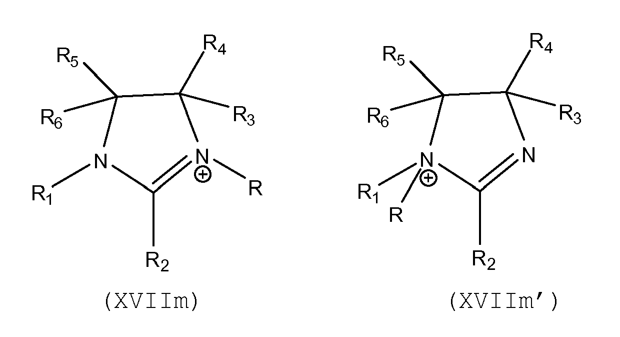
• R für H oder Methyl steht, R₁ und R₂ unabhängig voneinander Wasserstoff, Methyl oder Ethyl, oder ein linearer gesättigter oder ungesättigter Acylrest mit 14 bis 22, vorzugsweise 16 bis 18 Kohlenstoffatomen sind und R₃ bis R₆ unabhängig voneinander für Wasserstoff, einen linearen gesättigten, gegebenenfalls OH-Gruppen enthaltenden Alkylrest mit 1 - 4 Kohlenstoffatomen stehen, bevorzugt Methyl oder ein Fettsäurerest ist,; insbesondere bevorzugt sind R₁ und R₂ Fettsäureacylreste, sowie R oder R₂ und R₃ Fettsäureacylreste. Von besonderer Bedeutung sind die Substanzen entsprechend Formel (XIIIm). Teilweise sind in der Literatur hierfür auch irreführende Formeln (analog Formel XIIIm' oder XIIIl) eingeführt.

In Betracht kommen weiterhin ionische Flüssigkeiten, bei denen das Kation [A]⁺ ein Imidazoliniumion (XVIIn) beziehungsweise (XVIIn') ist, bei dem 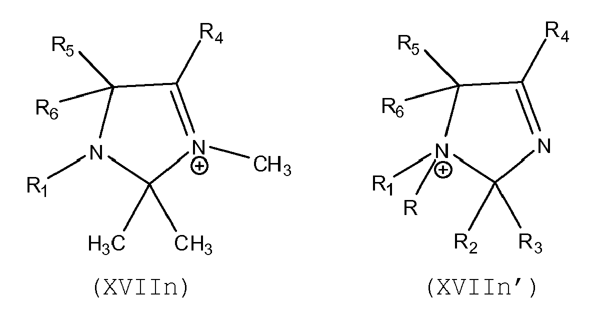
• R₁ bis R₃ unabhängig voneinander Wasserstoff, Methyl oder Ethyl sind und R₄ bis R₆ unabhängig voneinander Wasserstoff oder Methyl sind.

In Betracht kommen daneben ionische Flüssigkeiten, bei denen das Kation [A]⁺ ein Thiazoliumion (XVIIo) beziehungsweise (XVIIo') sowie als Oxazoliumion (XVIIp) ist, bei dem 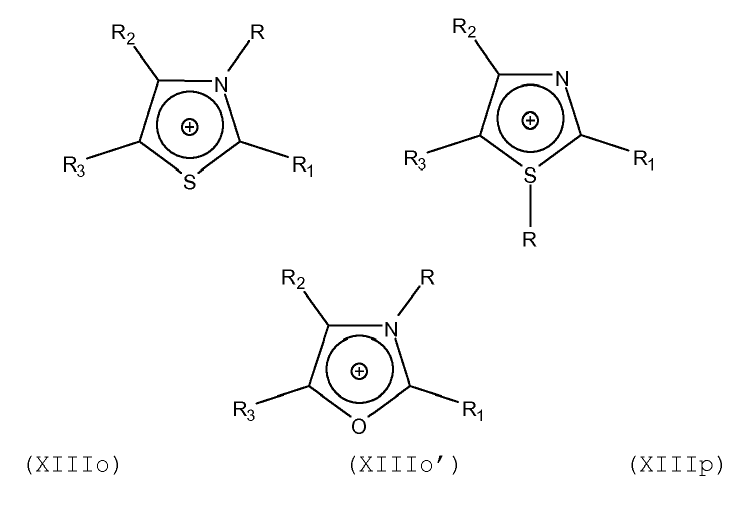
• R₁ Wasserstoff, Methyl, Ethyl oder Phenyl ist und R₂ und R₃ unabhängig voneinander Wasserstoff oder Methyl sind.

In Betracht kommen auch ionische Flüssigkeiten, bei denen das Kation [A]⁺ ein 1,2,4-Triazoliumion (XVIIq), (XVIIq') beziehungsweise (XVIIq'') ist, bei dem 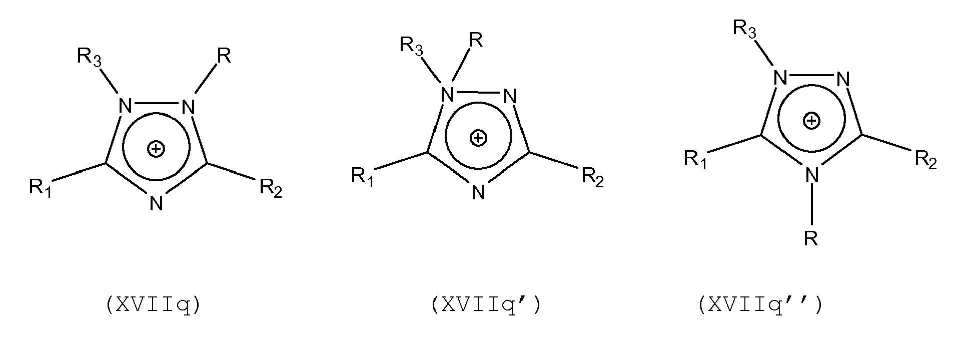
• R₁ und R₂ unabhängig voneinander Wasserstoff, Methyl, Ethyl oder Phenyl sind und R₃ Wasserstoff, Methyl oder Phenyl ist.

In Betracht kommen weiterhin ionische Flüssigkeiten, bei denen das Kation [A]⁺ ein 1,2,3-Triazoliumion (XVIIr), (XVIIr') beziehungsweise (XVIIr'') ist, bei dem 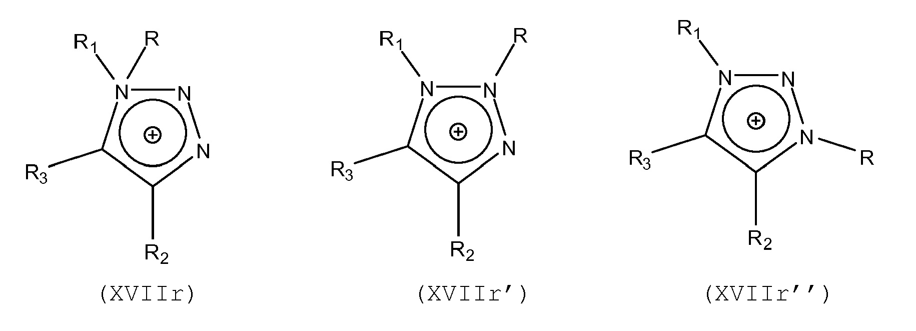
• R₁ Wasserstoff, Methyl oder Ethyl ist und R₂ und R₃ unabhängig voneinander Wasserstoff oder Methyl sind, oder R₂ und R₃ zusammen 1 ,4-Buta-1 ,3-dienylen ist.

In Betracht kommen zudem ionische Flüssigkeiten, bei denen das Kation [A]⁺ ein Pyrrolidiniumion (XVIIs) ist, bei dem 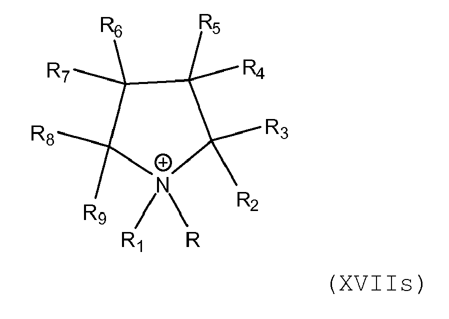
• R₁ Wasserstoff, Methyl, Ethyl oder Phenyl ist und R₂ bis R₉ unabhängig voneinander Wasserstoff oder Methyl sind.

In Betracht kommen daneben ionische Flüssigkeiten, bei denen das Kation [A]⁺ ein Imidazolidiniumion (XVIIt) ist, bei dem 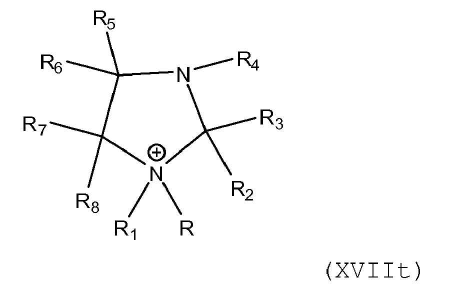
• R₁ und R₄ unabhängig voneinander Wasserstoff, Methyl, Ethyl oder Phenyl sind und R₂ und R₃ sowie R₅ bis R₈ unabhängig voneinander Wasserstoff oder Methyl sind.

In Betracht kommen auch ionische Flüssigkeiten, bei denen das Kation [A]⁺ ein Ammoniumion (IV) ist, bei dem 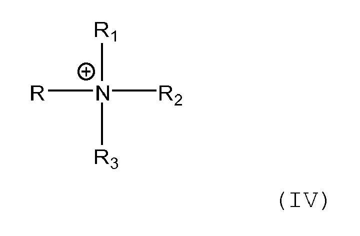
• R₁ bis R₃ unabhängig voneinander C₁-C₁₈-Alkyl sind; oder
• R₁ bis R₃ unabhängig voneinander Wasserstoff oder C C₁-C₁₈-Alkyl sind und R₄ 2-Hydroxyethyl ist; oder
• R₁ und R₂ zusammen 1,5-Pentylen oder 3-Oxa-1,5-pentylen sind und R₃ C₁-C₁₈-Alkyl, 2-Hydroxyethyl oder 2-Cyanoethyl ist.

Als besonders bevorzugte Ammoniumionen (IV) seien außerdem genannt Methyl-tri-(1-butyl)-ammonium, 2-Hydroxyethyl-ammonium, Bis(2-hydroxyethyl)dimethlyl-ammonium, N,N-Dimethylpiperidinium und N,N-Dimethyl-morpholinium.
Zudem kommen ionische Flüssigkeiten in Betracht, bei denen das Kation [A]⁺ ein Guanidiniumion (IVv) ist, bei dem 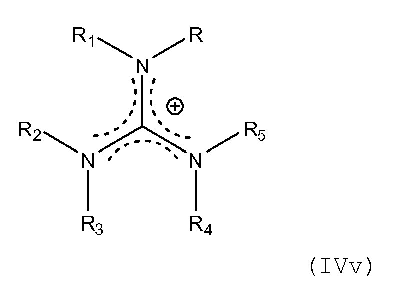
• R₁ bis R₅ Methyl sind.
• R₁ bis R₅ unabhängig voneinander C₁-C₁₈-Alkyl sind; oder
• R₁ bis R₅ unabhängig voneinander Wasserstoff oder C₁-C₁₈-Alkyl oder 2-Hydroxyethyl sind.
   Als ganz besonders bevorzugtes Guanidiniumion (IVv) sei genannt N,N,N',N',N",N"- Hexamethylguanidinium.
   In Betracht kommen auch ionische Flüssigkeiten, bei denen das Kation [A]⁺ ein Derivat eines Ethanolamins, z.B. ein Choliniumion (XVIIw), oder eines Diethanolamins (XVIIw'), oder eines Triethanolamins (XVIIw'') ist, bei dem 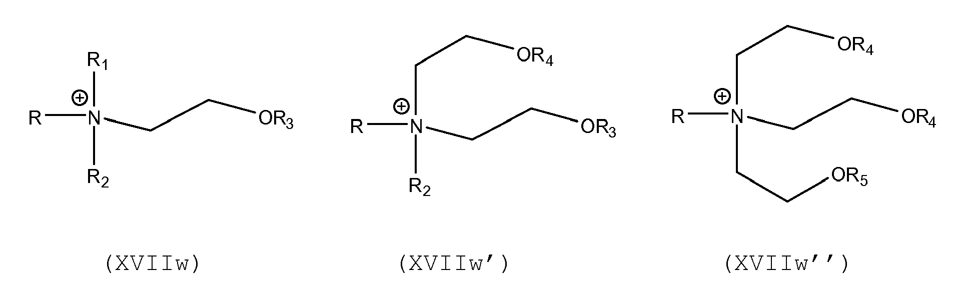
• R₁ und R₂ unabhängig voneinander Methyl, Ethyl, 1-Butyl oder 1-Octyl sind und R₃ Wasserstoff, Methyl, Ethyl, Acetyl, -SO₂OH oder -PO(OH)₂ ist;
• R₁ Methyl, Ethyl, 1-Butyl oder 1-Octyl ist, R₂ eine -CH₂-CH₂-OR₄-Gruppe ist und R₃ und R₄ unabhängig voneinander Wasserstoff, Methyl, Ethyl, Acetyl, -SO₂OH oder -PO(OH)₂ sind; oder
• R₁ eine -CH₂-CH₂-OR₄-Gruppe ist, R₂ eine -CH₂-CH₂-OR₅-Gruppe ist und R₃ bis R₅ unabhängig voneinander Wasserstoff, Methyl, Ethyl, Acetyl, -SO₂OH oder -PO(OH)₂ sind.
• R₁ Methyl, Ethyl, 1-Butyl, 1-Octyl, Acetyl, -SO₂OH, oder -PO(OH)₂ ist und R₃ bis R₅ unabhängig voneinander Wasserstoff, Methyl, Ethyl, Acetyl, -SO₂OH, -PO(OH)₂, oder -(CₙH₂ₙO)ₘR₁ mit n = 1 bis 5 und m = 1 bis 100 sind.
   Bevorzugt sind außerdem Verbindungen in denen R, R1 und R2 Alkylgruppen mit 1 bis 4 Kohlenstoffatomen, besonders bevorzugt gleich einer Methylgruppe sind, und R3 und/oder R4 gesättigte oder ungesättigte Fettsäure- bzw. Acylreste mit 8 bis 22 Kohlenstoffatomen, bevorzugt 12 bis 18 KOhlenstoffatomen sind. Es können auch Mischungen der Acyl- oder Fettsäurereste (insbesondere beispielsweise in natürlich vorkommenden Verhältnissen) vorliegen.
   Ganz besonders bevorzugt ist bei Formel (XVIIw'') mit R, R1, R2 gleich einem Alkylrest mit 1 bis 4 Kohlenstofatomen, insbesondere Methylgruppen und R3 gleich einem Fettsäurerest und R4 und R5 gleich einem Fettsäurerest oder gleich Wasserstoff.

In Betracht kommen ionische Flüssigkeiten, bei denen das Kation [A]⁺ ein Phosphoniumion (VI) ist, bei dem
• R₁ bis R₃ unabhängig voneinander C₁-C₁₈-Alkyl, insbesondere Butyl, Isobutyl, 1-Hexyl oder 1-Octyl sind.

Unter den vorstehend genannten Kationen sind die Pyridiniumionen (XVIIa), Imidazoliumionen (XVI) u n d Ammoniumionen (IV) bevorzugt, insbesondere 1-Methylpyridinium, 1-Ethyl-pyridinium, 1-(1-Butyl)pyridinium, 1-(1-Hexyl)pyridinium, 1-(1-Octyl)pyridinium, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridinium, 1-(1-Butyl)-2-methylpyridinium, 1-(1-Hexyl)-2-methylpyridinium, 1-(1-Octyl)-2-methylpyridinium, 1-(1-Dodecyl)-2-methylpyridinium, 1-(1-Tetradecyl)-2-methylpyridinium, 1-(1-Hexadecyl)-2-methyl-**pyridinium**, 1-Methyl-2-ethylpyridinium, 1,2-Diethyl-pyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethyl-pyridinium, 1-(1-Hexadecyl)-2-ethylpyridinium, 1,2-Dimethyl-5-ethyl-pyridinium, 1,5-Diethyl-2-methyl-pyridinium, 1-(1-Butyl)-2-methyl-3-ethyl-pyridinium, 1-(1-Hexyl)-2- methyl-3-ethyl-pyridinium, 1-(1-Octyl)-2-methyl-3-ethyl-pyridinium, 1-(1-Dodecyl)-2- methyl-3-ethyl-pyridinium, 1-(1-Tetradecyl)-2-methyl-3-ethyl-pyridinium, 1-(1-Hexadecyl)-2-methyl-3-ethyl-pyridinium, 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Hexyl)-3-methyl-imidazolium, 1-(1-Octyl)-3-methylimidazolium, 1-(1-Dodecyl)-3-methylimidazolium, 1-(1-Tetradecyl)-3-methylimidazolium, 1-(1-Hexadecyl)-3-methylimidazolium, 1,2-Dimethylimidazolium, 1,2,3-Trimethylimidazolium, 1-Ethyl-2,3-dimethylimidazolium, 1-(1-Butyl)-2,3-dimethyl-imidazolium, 1-(1-Hexyl)-2,3-dimethyl-imidazolium und 1-(1-Octyl)-2,3-dimethylimidazolium, 1,4-Dimethylimidazolium, 1,3,4-Trimethylimidazolium, 1,4-Dimethyl-3-ethylimidazolium, 3-butylimidazolium, 1,4-Dimethyl-3-octylimidazolium, 1,4,5-Trimethyl-imidazolium, 1,3,4,5-Tetramethylimidazolium, 1, 4,5-Trimethyl-3-ethylimidazolium, 1,4,5-Trimethyl-3-butylimidazolium, 1,4,5-Trimethyl-3-octylimidazolium und 2-Hydroxy-ethyl-ammonium.

Bei den in den Formeln (IIIa) bis (IIIj) genannten Metallkationen [M¹]⁺, [M²]⁺, [M³]⁺, [M⁴]²⁺ und [M⁵]³⁺ handelt es sich im Allgemeinen um Metallkationen der 1., 2., 6., 7., 8., 9., 10., 11., 12. und 13. Gruppe des Periodensystems. Geeignete Metallkationen sind beispielsweise Li⁺, Na⁺, K⁺, Cs⁺, Mg²⁺, Ca²⁺, Ba²⁺, Cr³⁺, Fe²⁺, Fe³⁺, Co²⁺, Ni²⁺, Cu²⁺, Ag⁺, Zn²⁺ und Al³⁺.

Die erfindungsgemäß Verwendung findenden ionischen Flüssigkeiten bestehen aus mindestens einem der vorgenannten Kationen kombiniert mit jeweils mindestens einem Anion. Als Anionen kommen prinzipiell alle Anionen in Betracht, welche in Verbindung mit dem Kation zu einer ionische Flüssigkeit führen. Das Anion [Y]ⁿ⁻ der ionischen Flüssigkeit ist beispielsweise ausgewählt aus:
- der Gruppe der Halogenide und halogenhaltigen Verbindungen der Formeln: F⁻ Cl⁻, Br⁻, I⁻, BF₄⁻, PF₆⁻, AlCl₄⁻, Al₂Cl₇⁻, Al₃Cl₁₀⁻, AlBr₄⁻, FeCI₄⁻, BCl₄⁻ SbF₆⁻, AsF₆⁻, ZnCl₃⁻, SnCl₃⁻, CuCl₂⁻, CF₃SO₃⁻, (CF₃SO₃)₂N⁻, CF₃CO₂⁻, CCl₃CO₂⁻, CN⁻, SCN⁻, OCN⁻, NO₂⁻, NO₃⁻, N(CN)⁻;
- der Gruppe der Sulfate, Sulfite und Sulfonate der allgemeinen Formeln: SO₄²⁻, HSO₄⁻, SO₃^{2"}, HSO₃⁻, R^{a}OSO₃⁻, R^{a}SO₃⁻;
- der Gruppe der Phosphate der allgemeinen Formeln: PO₄³⁻, HPO₄²⁻, H₂PO⁴⁻, R^{a}PO₄²⁻, HR^{a}PO₄⁻, R^{a}R^{b}PO₄⁻;
- der Gruppe der Phosphonate und Phosphinate der allgemeinen Formel: R^{a}HPO₃⁻,R^{a}R^{b}PO₂⁻, R^{a}R^{b}PO₃⁻;
- der Gruppe der Phosphite der allgemeinen Formeln: PO₃³⁻, HPO₃²⁻, H₂PO₃⁻, R^{a}PO₃²⁻, R^{a}HPO₃⁻, R^{a}R^{b}PO₃-;
- der Gruppe der Phosphonite und Phosphinite der allgemeinen Formel: R^{a}PO₂⁻, R^{a}HPO₂⁻, R^{a}R^{b}PO⁻, R^{a}HPO⁻;
- der Gruppe der Carboxylate der allgemeinen Formeln: RaCOO⁻;
- der Gruppe der Borate der allgemeinen Formeln: BO₃³⁻, HBO₃²⁻, H₂BO₃⁻, R^{a}R^{b}O₃⁻, R^{a}HBO₃⁻, R^{a}BO₃²⁻, B(OR^{a})(OR^{b})(OR^{c})(OR^{d})⁻, B(HSO₄), B(R^{a}SO₄)⁻ ;
- der Gruppe der Boronate der allgemeinen Formeln: R^{a}BO₂²⁻, R^{a}R^{b}BO⁻;
- der Gruppe der Carbonate und Kohlensäureester der allgemeinen Formeln: HCO₃⁻, CO₃²⁻, R^{a}CO₃⁻;
- der Gruppe der Silikate und Kieselsäuresäureester der allgemeinen Formeln: SiO₄⁴⁻, HSiO₄³⁻, H₂SiO₄²⁻, H₃SiO₄⁻, RaSio₄³⁻, R^{a}R^{b}Sio₄²⁻, R^{a}R^{b}R^{c}SiO₄⁻, HR^{a}Sio₄²⁻, H₂RaSiO₄⁻, HR^{a}R^{b}Sio₄⁻;
- der Gruppe der Alkyl- bzw. Arylsilan-Salze der allgemeinen Formeln: R^{a}SiO₃³⁻, R^{a}R^{b}SiO₂²⁻, R^{a}R^{b}R^{c}Sio⁻, R^{a}R^{b}R^{c}SiO₃⁻, R^{a}R^{b}R^{c}SiO₂⁻, R^{a}R^{b}SiO₃²⁻;
- der Gruppe der Carbonsäureimide, Bis(sulfonyl)imide und Sulfonylimide der allgemeinen Formeln: 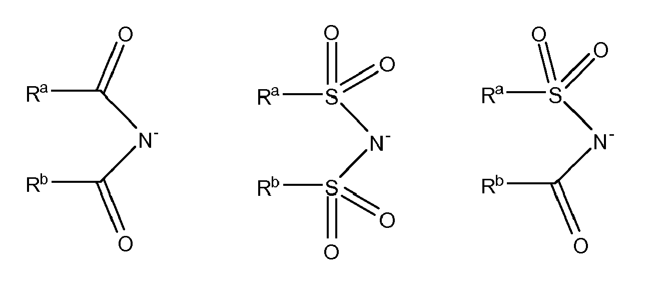
- der Gruppe der Methide der allgemeinen Formel: 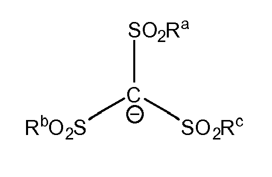
- der Gruppe der Alkoxide und Aryloxide der allgemeinen Formeln: R^{a}O⁻;
- der Gruppe der Halometallate der allgemeinen Formel [MᵣHalₜ]^{s-}, wobei M für ein Metall und Hal für Fluor, Chlor, Brom oder lod steht, r und t ganze positive Zahlen sind und die Stöchiometrie des Komplexes angeben und s eine ganze positive Zahl ist und die Ladung des Komplexes angibt;
- der Gruppe der Sulfide, Hydrogensulfide, Polysulfide, Hydrogenpolysulfide und Thiolate der allgemeinen Formeln:
   S²⁻, HS⁻, Sᵥ]²⁻, [HSᵥ]⁻ [R^{a}S]⁻, wobei v eine ganze positive Zahl von 2 bis 10 ist;
- der Gruppe der komplexen Metallionen wie Fe(CN)₆³⁻, Fe(CN)₆⁴⁻, MnO₄⁻, Fe(CO)₄⁻.
   Darin bedeuten R^{a}, R^{b}, R^{c} und R^{d} unabhängig voneinander jeweils
- Wasserstoff;
- C₁-C₃₀-Alkyl und deren aryl-, heteroaryl-, cycloalkyl, halogen-, hydroxy-, amino-, carboxy-, formyl-, -O-, -CO-, -CO-O- oder -CO-N< substituierte Komponenten, wie beispielsweise Methyl, Ethyl, 1-Propyl, 2-Propyl, 1-Butyl, 2-Butyl, 2-Methyl-1- propyl (Isobutyl), 2-Methyl-2-propyl (tert.-Butyl), 1-Pentyl, 2-Pentyl, 3-Pentyl, 2- Methyl-1-butyl, 3-Methyl-1-butyl, 2-Methyl-2-butyl, 3-Methyl-2-butyl, 2,2- Dimethyl-1-propyl, 1-Hexyl, 2-Hexyl, 3-Hexyl, 2-Methyl-1-pentyl, 3-Methyl-1- pentyl, 4-Methyl-1-pentyl, 2-Methyl-2-pentyl, 3-Methyl-2-pentyl, 4-Methyl-2- pentyl, 2-Methyl-3-pentyl, 3-Methyl-3-pentyl, 2,2-Dimethyl-1-butyl, 2,3-Dimethyl- 1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl, Dodecyl, Tridecyl, Tetradecyl, Pen- tadecyl, Hexadecyl, Heptadecyl, Octadecyl, Nonadecyl, Icosyl, Henicosyl, Doco- syl, Tricosyl, Tetracosyl, Pentacosyl, Hexacosyl, Heptacosyl, Octacosyl, Nonacosyl, Triacontyl, Phenylmethyl (Benzyl) , Diphenylmethyl, Triphenylmethyl, 2-Phenylethyl, 3-Phenylpropyl, Cyclopentylmethyl, 2-Cyclopentylethyl, 3-Cyclo- pentylpropyl, Cyclohexylmethyl, 2-Cyclohexylethyl, 3-Cyclohexylpropyl, Methoxy, Ethoxy, Formyl, Acetyl oder C_{q}F_{2(q-a)+(1-b)}H_{2a+b} mit q < 30, 0 ≤ a ≤ q und b = 0 oder 1 (beispielsweise CF₃, C₂F₅, CH₂CH₂-C_{(q-2)}F_{2(q-2)+1}, C₆F₁₃, C₈F₁₇, C₁₀F₂₁, C₁₂F₂₅);
- C₃-C₁₂-Cycloalkyl und deren aryl-, heteroaryl-, cycloalkyl-, halogen-, hydroxy-, amino-, carboxy-, formyl-, -O-, -CO- oder -CO-O-substituierte Komponenten, wie beispielsweise Cyclopentyl, 2-Methyl-1-cyclopentyl, 3-Methyl-1-cyclopentyl, Cyclohexyl, 2-Methyl-1-cyclohexyl, 3-Methyl-1-cyclohexyl, 4-Methyl-1-cyclohexyl o- der C_{q}F_{2(q-a)-(1-b)}H_{2a-b} mit q ≤ 30, 0 ≤ a ≤ q und b = 0 oder 1 ;
- C₂-C₃₀-Alkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 2-Propenyl, 3-Butenyl, cis-2-Butenyl, trans-2-Butenyl oder CqF_{2(q-a)-(1-b)}H_{2a-b} mit q ≤ 30, 0 ≤ a ≤ q und b = 0 oder 1;
- C₃-C₁₂-Cycloalkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 3-Cyclopentenyl, 2-Cyclohexenyl, 3-Cyclohexenyl, 2,5- Cyclohexadienyl oder C_{q}F_{2(q-a)-3(1-b)}H_{2a-3b} mit q ≤ 30, 0 ≤ a ≤ q und b = 0 oder 1;
- Aryl oder Heteroaryl mit 2 bis 30 Kohlenstoffatomen und deren alkyl-, aryl-, heteroaryl-, cycloalkyl-, halogen-, hydroxy-, amino-, carboxy-, formyl-, -O-, - CO- oder -CO-O-substituierte Komponenten, wie beispielsweise Phenyl, 2-Methyl-phenyl (2-ToIyI), 3-Methyl-phenyl (3-ToIyI), 4-Methyl-phenyl, 2-Ethyl-phenyl, 3-Ethyl-phenyl, 4-Ethyl-phenyl, 2,3-Dimethyl-phenyl, 2,4-Dimethyl-phenyl, 2,5-Dimethyl-phenyl, 2,6-Dimethyl-phenyl, 3,4-Dimethyl-phenyl, 3,5-Dimethyl-phenyl, 4-Phenyl-phenyl, 1-Naphthyl, 2-Naphthyl, 1-Pyrrolyl, 2-Pyrrolyl, 3-Pyrrolyl, 2-Pyridinyl, 3-Pyridinyl, 4-Pyridinyl oder C₆F₍₅₋ₐ₎Hₐ mit 0 ≤ a ≤ 5; oder
- zwei Reste einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring.

In Betracht kommende Anionen sind zum Beispiel Chlorid; Bromid; Iodid; Thiocyanat; Hexafluorophosphat; Trifluormethansulfonat; Methansulfonat; Formiat; Acetat; Glycolat; Lactat; Oxalat; Citrat; Malat; Maleat; Tartrat; Mandelat; Nitrat; Nitrit; Trifluoracetat; Sulfat; Hydrogensulfat; Methylsulfat; Ethylsulfat; 1-Propylsulfat; 1-Butylsulfat; 1-Hexylsulfat; 1-Octylsulfat; Phosphat; Dihydrogenphosphat; Hydrogenphosphat; C₁-C₄-Dialkylphosphate; Propionat; Tetrachloroaluminat; Al₂Cl₇⁻; Chlorozinkat; Chloroferrat; Bis(trifluoromethylsulfonyl)imid; Bis(pentafluoroethyl-sulfonyl) imid; Bis (methylsulfonyl) imid; Bis (p-Tolylsulfonyl)imid; Tris(trifluoromethylsulfonyl)methid; Bis(pentafluoroethylsulfonyl)methid; p-Tolylsulfonat; Tetracarbonylcobaltat; Dimethylenglykolmonomethylethersulfat; Oleat; Stearat; Acrylat; Methacrylat; Maleinat; Hydrogencitrat; Vinylphosphonat; Bis(pentafluoroethyl)phosphinat; Borate wie Bis[salicylato-(2-)]borat, Bis[oxalato(2-)]borat, Bis[1,2-benzoldiolato(2-)-O,O']borat, Tetracyanoborat, Tetrafluoroborat; Dicyanamid; Tris(pentafluoroethyl)trifluorophosphat; Tris(heptafluoropropyl)trifluorophosphat, cyclische Arylphosphate wie Brenzcatecholphosphat (C₆H₄O₂) P (O) O⁻ und Chlorocobaltat.

Bevorzugte Anionen werden ausgewählt aus der Gruppe - ohne Anspruch auf Vollständigkeit - der Halogenide, Bis(perfluoralkylsulfonyl)amide bzw. -imide wie z.B. Bis (trifluormethylylsulfonyl) i m i d , Alkyl- und Aryltosylate, Perfluoralkyltosylate, Nitrat, Sulfat, Hydrogensulfat, Alkyl- und Arylsulfate, Polyethersulfate und - sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat, Saccharinat. Weiterhin sind Dicyanamid, Thiocyanat, Isothiocyanat, Tetraphenylborat, Tetrakis(pentafluorphenyl)borat, Tetrafluoroborat, Hexafluorophosphat, Polyetherphosphate und Phosphat.

### Ganz besonders bevorzugte Anionen sind:

Chlorid, Bromid, Hydrogensulfat, Tetrachloroaluminat, Thiocyanat, Methylsulfat, Ethylsulfat, Methansulfonat, Formiat, Acetat, Glycolat, Lactat, Dimethylphosphat, Diethylphosphat, p-Tolylsulfonat, Tetrafluoroborat und Hexafluorophosphat.

Erfindungsgemäß in einer weiteren bevorzugten Ausführungsform werden solche ionische Flüssigkeiten bzw. deren Mischungen verwendet, die eine Kombination eines 1,3-Dialkylimidazolium-, 1,2,3-Trialkylimidazolium-, 1,3-Dialkylimidazolinium- und 1,2,3-Trialkylimidazoliniumkations mit einem Anion ausgesucht aus der Gruppe der Halogenide, Bis(trifluormethylylsulfonyl)imid, Perfluoralkyltosylate, Alkylsulfate und -sulfonate, perfluorierte Alkylsulfonate und -sulfate, Perfluoralkylcarboxylate, Perchlorat, Dicyanamid, Thiocyanat, Isothiocyanat, Tetraphenylborat, Tetrakis(pentafluorphenyl)borat, Tetrafluoroborat, Hexafluorophosphat, Acetat, Glycolat, Lactat enthalten.

Darüber hinaus können auch einfache, kommerziell erhältliche, acyclische quarternäre Ammoniumsalze wie z.B. TEGO^{®} IL T16ES, TEGO^{®} IL K5MS, TEGO^{®} IL DS oder auch TEGO® IL 2MS (Produkte der Evonik Goldschmidt GmbH) eingesetzt werden.

Besonders bevorzugte ionische Flüssigkeiten im Rahmen dieser Offenbarung sind:
1-Butyl-3-methylimidazolium2-(2-methoxyethoxy)ethylsulfat, 1-Butyl-3-methylimidazolium acetate, 1-Ethyl-3-methylimidazolium acetate, Tetrabutylammoniumbenzoat,
Trihexyltetradecylphosphonium-bis(2,4,4-trimethylpentyl)-phosphinat, 1-Ethyl-3-methylimidazolium bis(pentafluoro-ethylsulfonyl)imid, 1-Butyl-1-methylpyrrolidinium bis(trifluoromethylsulfonyl)imid, 1-Butyl-3-methylimida-zoliumbis(trifluoromethylsulfonyl)imid, 1-Butyl-3-methylpyridinium-bis(trifluoromethylsulfonyl)i m i d , 1 , 2-Dimethyl-3-propylimidazolium bis(trifluoromethyl-sulfonyl)imid, 1-Ethyl-3-methylimidazolium bis(trifluoro-methylsulfonyl)imid, 3-Methyl-1-propylpyridinium bis(trifluoromethylsulfonyl)imid, Methyltrioctylammonium bis(trifluoromethylsulfonyl)imid, Tetrabutylammonium bis(trifluoromethylsulfonyl)imid,
Trihexyltetradecylphosphonium-bis(trifluoromethylsulfonyl)imid, 1-Butyl-1-methyl-pyrrolidiniumbromid, 1-Butylpyridiniumbromid, 1-Ethyl-3-methylimidazoliumbromid, 4-Methyl-N-butylpyridiniumbromid, Tetrabutylammoniumbromid, Tetrabutylphosphoniumbromid, Tetraheptylammoniumbromid, Tetrahexylammoniumbromid, Tetraoctylammoniumbromid, Tetraoctylphosphoniumbromid, Tetrapentylammoniumbromid, Tributylhexadecylphosphoniumbromid, 1-Allyl-3-methylimidazoliumchlorid, 1-Benzyl-3-methylimidazoliumchlorid, 1-Butyl-1-methylpyrrolidiniumchlorid, 1-Butyl-2,3-dimethylimidazoliumchlorid, 1-Butyl-3-methylimidazoliumchlorid, 1-Butyl-4-methylpyridiniumchlorid, 1-Ethyl-2,3-dimethylimidazoliumchlorid, 1-Ethyl-3-methylimidazoliumchlorid, 1-Hexyl-3-methylimidazolium chlorid, 1-Methyl-3-octylimidazoliumchlorid,
Methylimidazoliumchlorid, Tetrabutylammoniumchlorid, Tetrabutylphosphoniumchlorid, Tetraheptylammoniumchlorid, Tetraoctylammoniumchlorid, Trihexyltetradecylphosphoniumchlorid, Butylammonium-α-cyano-4-hydrocinnamat, Diethylammonium-α-cyano-4-hydrocinnamat, Trihexyltetradecylphosphoniumdecanoat, 1-Butyl-1-methylpyrrolidiniumdicyanamid, 1-Butyl-3-methylimidazoliumdicyanamid, 1-Ethyl-3-methylimidazoliumdicyanamid, Trihexyltetradecylphosphoniumdicyanamid, 1-Ethyl-2,3-dimethylimidazoliumethylsulfat, 1-Ethyl-3-methylimidazoliumethylsulfat, 1-Benzyl-3-methylimidazoliumhexafluorophosphat, 1-Butyl-2, 3-dimethylimidazoliumhexafluorophosphat, 1-Butyl-3-(3,3,...-tridecafluorooctyl)-imidazoliumhexafluorophosphat, 1-Butyl-3-methylimidazoliumhexafluorophosphat, 1-Ethyl-3-methylimidazoliumhexafluorophosphat, 1-Hexyl-3-methylimidazoliumhexafluorophosphat, 1-Methyl-3-(3,3,...-tridecafluorooctyl)imidazoliumhexafluorophosphat , 1-Butyl-4-methylpyridiniumhexafluorophosphat, 1-Methyl-3-octylimidazoliumhexafluorophosphat, Trihexyltetradecylphosphoniumhexafluorophosphat, 1-Butyl-3-methylimidazoliumhydrogensulfat, 1-Ethyl-3-methylimidazoliumhydrogensulfat, Methylimidazoliumhydrogensulfat, 1-Dodecyl-3-methylimidazoliumhydrogensulfat, 1-Dodecyl-3-methylimidazoliumiodid, Tetrahexylammoniumiodid, 1-Butyl-3-methylimidazoliummethansulfonat, 1-Ethyl-3-methylimidazoliummethansulfonat, Tetrabutylammoniummethansulfonat, Tetrabutylphosphoniummethansulfonat, 1-Butyl-3-methylimidazoliummethylsulfat, 1,3-Dimethylimidazoliummethylsulfat, Methyltributylammoniummethylsulfat, 1-Ethyl-3-methylimidazoliummethylsulfat, 1,2,3-Trimethylimidazoliummethylsulfat, 1-Butyl-3-methylimidazoliumnitrat, 1-Ethyl-3-methylimidazoliumnitrat, Tetrabutylammoniumnonafluorobutansulfonat, Tetrabutylammoniumheptadecafluorooctansulfonat, 1-Butyl-3-methylimidazoliumoctylsulfat, 4-(3-Butyl-1-imidazolio)butan-1-sulfonat, 3-(Triphenylphosphonio)propan-1-sulfonat, 1-Butyl-3-methylimidazoliumtetrachloroaluminat, 1-Ethyl-3-methylimidazoliumtetrachloroaluminat, 1-Benzyl-3-methylimidazoliumtetrafluoroborat, 1-Butyl-2,3-dimethylimidazoliumtetrafluoroborat, 1-Butyl-3-methylimidazoliumtetrafluoroborat, 1-Ethyl-3-methylimidazoliumtetrafluoroborat, 1-Hexyl-3-methylimidazoliumtetrafluoroborat, 1-Methyl-3-octylimidazoliumtetrafluoroborat, 1-Butyl-1-methylpyrrolidiniumtetrafluoroborat, 1-Butyl-4-methylpyridiniumtetrafluoroborat, Tetrabutylammoniumtetrafluoroborat, Tetrahexylammoniumtetrafluoroborat, Tetrabutylphosphoniumtetrafluoroborat, Trihexyltetradecylphosphoniumtetrafluoroborat, 1-Butyl-3-methylimidazoliumthiocyanat, 1-Ethyl-3-methylimidazoliumthiocyanat, Tetrapentylammoniumthiocyanat, Trioctylmethylammoniumthiosalicylat, 1-Butyl-3-methylimidazoliumtosylat, 1-Ethyl-3-methylimidazoliumtosylat, Tetrabutylphosphoniumtosylat, Triisobutylmethylphosphoniumtosylat, 3-(Triphenylphosphonio)-propan-1-sulfonsäuretosylat, Tetraethylammoniumtrifluoroacetat, 4-(3-Butyl-1-imidazolio)-butan-1-sulfonsäuretrifluormethansulfonat, 1-Butyl-3-methylimidazoliumtrifluormethansulfonat, 1-Ethyl-2,3-dimethylimidazoliumtrifluormethansulfonat, 1-Ethyl-3-methylimidazoliumtrifluormethansulfonat, 1-Hexyl-3-methylimidazoliumtrifluormethansulfonat, 1-Methyl-3-octylimidazoliumtrifluormethansulfonat, Tetraethylammoniumtrifluormethansulfonat, 1,2,3-Trimethylimidazoliumtrifluormethansulfonat, 1-Hydroxyethyl-3-methylimidazolium-2-(2-methoxyethoxy)ethylsulfat, 1-Hydroxyethyl-3-methylimidazoliumacetat, 1-Hydroxyethyl-3-methylimidazoliumtrifluoracetat, 1-Hydroxyethyl-3-methylimidazolium-bis (trifluoromethylsulfonyl) imid, 1-Hydroxyethyl-3-methylimidazoliumbromid, 1-Hydroxyethyl-3-methylimidazoliumchlorid, 1-Hydroxyethyl-3-methylimidazoliumdecanoat, 1-Hydroxyethyl-3-methylimidazoliumdicyanamid, 1-Hydroxyethyl-3-methylimidazoliumhexafluorophosphat, 1-Hydroxyethyl-3-methylimidazoliumhydrogensulfat, 1-Hydroxyethyl-3-methyl**imidazoliumiodid**, 1-Hydroxyethyl-3-methylimidazoliummethansulfonat, 1-Hydroxyethyl-3-methylimidazoliummethylsulfat, 1-Hydroxyethyl-3-methylimidazoliumethylsulfat, 1-Hydroxyethyl-3-methylimidazoliumnitrat, 1-Hydroxyethyl-3-methylimidazoliumphosphat, 1-Hydroxyethyl-3-methylimidazoliumoctylsulfat, 1-Hydroxyethyl-3-methylimidazoliumtetrachloroaluminat, 1-Hydroxyethyl-3-methylimidazoliumtetrafluoroborat, 1-Hydroxyethyl-3-methylimidazoliumthiocyanat, 1-Hydroxyethyl-3-methylimidazolium-salicylat, 1-Hydroxyethyl-3-methylimidazoliumthiosalicylat, 1-Hydroxy-ethyl-3-methylimidazoliumtosylat, 1-Hydroxyethyl-3-methylimidazoliumtrifluormethansulfonat, 1-Hydroxyethyl-3-methylimidazoliumlactat, 1-Hydroxyethyl-3-methylimidazoliumglycolat, 1-Hydroxyethyl-3-methylimidazoliumcitrat, 1-Hydroxyethyl-3-methylimidazoliumoxalat, 1-Hydroxyethyl-3-methylimidazoliumtartrat, bis-(Hydroxyethyl)dimethylammoniumacetat, bis-(Hydroxyethyl)dimethylammoniumtrifluoracetat, bis-(Hydroxyethyl)dimethylammonium-bis(trifluoromethylsulfonyl)imid, bis-(Hydroxyethyl)dimethylammoniumbromid, bis-(Hydroxyethyl)dimethylammonium-chlorid, bis-(Hydroxyethyl)dimethylammoniumdecanoat, bis-(Hydroxyethyl)dimethylammoniumdicyanamid, bis-(Hydroxy-ethyl)dimethylammoniumhexafluorophosphat, bis-(Hydroxy-ethyl)dimethylammoniumhydrogensulfat, bis-(Hydroxyethyl)-dimethylammoniumiodid, bis-(Hydroxyethyl)dimethylammoniummethansulfonat, bis-(Hydroxyethyl)dimethylammoniummethylsulfat, bis-(Hydroxyethyl)dimethylammoniumethylsulfat, bis-(Hydroxyethyl)dimethylammoniumnitrat, bis-(Hydroxyethyl)dimethylammoniumphosphat, bis-(Hydroxy-ethyl)dimethylammoniumoctylsulfat, bis-(Hydroxyethyl)dimethylammoniumtetrachloroaluminat, bis-(Hydroxyethyl)-dimethylammoniumtetrafluoroborat, bis-(Hydroxyethyl)dimethylammoniumthiocyanat, bis- (Hydroxyethyl) dimethylammoniumsalicylat, bis-(Hydroxyethyl)dimethylammoniumthiosalicylat, bis-(Hydroxyethyl)dimethylammoniumtosylat, bis-(Hydroxyethyl)dimethylammoniumtrifluormethansulfonat, bis-(Hydroxyethyl)dimethylammoniumlactat, bis-(Hydroxy-ethyl)dimethylammoniumglycolat, bis-(Hydroxyethyl)dimethylammoniumcitrat, bis-(Hydroxyethyl)dimethylammoniumoxalat, bis-(Hydroxyethyl)dimethylammoniumtartrat.

Durch Additivierung mit den folgenden Performanceadditiven können die Benetzungseigenschaften von bevorzugt einphasigen Zusammensetzungen enthaltend ionische Flüssigkeiten auf festen Oberflächen verbessert werden. Unter Performanceadditiven sind hier Stoffe zu verstehen, die Benetzungseigenschaften und/oder das Spreitverhalten von ionischen Flüssigkeiten auf festen Oberflächen verbessern. Unter Benetzung ist hier die Bedeckung der Oberfläche durch die Flüssigkeit zu verstehen. Ein verbessertes Benetzungsverhalten ist daran erkennbar, dass weniger unbenetzte Fehlstellen existieren und dass die Benetzung gleichmäßig ist.
Unter Spreitung ist hier die spontane Benetzung der festen Oberfläche zu verstehen. Die Flüssigkeit breitet sich spontan auf der Oberfläche in Form einer flachen Scheibe aus. Im Idealfall handelt es sich um einen monomolekularen Film und einen Kontaktwinkel von Null. Für die Spreitung ist eine Erniedrigung der Oberflächenspannung der Flüssigkeit eine notwendige, aber nicht hinreichende Voraussetzung. Spreitung erfolgt ausschließlich auf hydrophoben Oberflächen.
Umso überraschender ist das Auffinden der nachfolgend beschriebenen, hauptsächlich tensidischen Substanzen, als wirksame Netz- und Spreitungsmittel in der Anwendung zusammen mit ionischen Flüssigkeiten.

Die erfindungsgemäßen Zusammensetzungen dienen der dauerhaften Benetzung fester Oberflächen und enthalten mindestens eine ionische Flüssigkeit und mindestens ein Performanceadditiv und gegebenenfalls Lösungsmittel und/oder weitere sonstige Hilfs- oder Zusatzstoffe.

Die erfindungsgemäßen Zusammensetzungen enthalten 50 bis 99,999 Gew.-%, bevorzugt 80 bis 99,999 Gew.-%, insbesondere mindestens 95 Gew.-% und besonders bevorzugt mehr als 98 bis 99,999 Gew.-% einer oder mehrerer ionischen Flüssigkeiten,
sowie 0 bis 20 Gew.-%, bevorzugt 0 bis 10 Gew.-% und besonders bevorzugt 0 bis 5 Gew.-% Lösungsmittel,
sowie 0 bis 20 Gew.-%, bevorzugt 0 bis 10 Gew.-% und besonders bevorzugt 0 bis 5 Gew.-% an Hilfs- und Zusatzstoffen,
sowie 0,001 bis 10 Gew.-%, bevorzugt 0,001 bis 5 Gew.-% und besonders bevorzugt 0,05 bis 1 Gew.-% eines oder mehrerer erfindungsgemäßer Performanceadditive,
wobei sich die Summe aller Komponenten der Zusammensetzung auf 100 Gew.-% addiert.

Bevorzugt wird in den erfindungsgemäßen Zusammensetzungen als Performanceadditive ein Netzmittel oder Spreitungsmittel verwendet.

Die erfindungsgemäßen Zusammensetzungen sind weiterhin bevorzugt einphasig.

In den erfindungsgemäßen Zusammensetzungen werden als Performanceadditiv bevorzugt ein oder mehrere Tenside verwendet.

Die erfindungsgemäßen Zusammensetzungen können als Lösungsmittel organische Lösungsmittel oder Wasser und/oder deren Mischungen enthalten, bevorzugt sind keine oder organische Lösungsmittel enthalten.

Tenside als solche werden in wässrigen Systemen oder organischen Systemen eingesetzt, die sich durch ihren nicht-ionischen Charakter beschreiben lassen.

Überraschend und vollkommen unerwartet können die genannten Tenside aber auch bei ionischen Flüssigkeiten die Benetzungseigenschaften und das Spreitverhalten positiv beeinflussen. Damit bieten sie in der Anwendung zusammen mit den ionischen Flüssigkeiten den Vorteil das Dispersionsverhalten und Haftungsverhalten von Zusammensetzungen, enthaltend diese Komponenten in gewünschter Weise beeinflussen zu können.

In den folgenden Formeln bedeutet der Rest P:

-(CH²-) _{g}(OC₂H₄-)ₕ(OC₃H₆-)ᵢ(OC₄H₈)ⱼ(OCH₂ CH 5C₆H₅))ₖOR²⁰

wobei
- R²⁰: ein Wasserstoff-, Alkyl- oder Carboxylrest. Vorzugsweise ist R²⁰ ein Wasserstoff- oder Methylrest oder Acetylrest. Der Index
- g: ist eine Zahl von 0 bis 6, der Index
- h: eine Zahl von 0 bis 20, der Index
- i: eine Zahl von 0 bis 50, mit h+i ≥ 1, der Index
- j: eine Zahl von 0 bis 10 und der Index
- k: eine Zahl von 0 bis 10.

Vorzugsweise hat der Index g einen Wert von 0 bis 3, der Index h einen Wert von 5 bis 80 und der Index i einen Wert von 0 bis 30, die Indices j und k sind vorzugsweise < 5, insbesondere 0.

### In den folgenden Formeln entspricht der Rest R²¹:

Wasserstoff oder einen linearen oder verzweigten, gegebenenfalls ungesättigten Alkylrest mit 1-25 Kohlenstoffatomen, beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2- Methyl-1-butyl, 3-Methyl-1-butyl, 2-Methyl-2-butyl, 3-Methyl-2-butyl, 2,2- Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl- 2-butyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Icosyl, Henicosyl, Docosyl, Tricosyl, Tetracosyl, Pentacosyl, Hexacosyl, Heptacosyl, Octacosyl, Nonacosyl, Triacontyl, Phenylmethyl (Benzyl), Diphenylmethyl, Triphenylmethyl, 2-Phenylethyl, 3-Phenylpropyl, Cyclopentylmethyl, 2-Cyclopentylethyl, 3-Cyclo- pentylpropyl, Cyclohexylmethyl, 2-Cyclohexylethyl, 3-Cyclohexylpropyl, Allyl, Undecaenyl, Dodecaenyl, Octadeaenyl, Eicosaenyl, Docosaenyl, Tetracosaenyl , Octadecadienyl, Octadecatrienyl, Eicosatetraenyl, Eicosapentaenyl, Docosapentaenyl, oder Docosahexaenyl.
1. Nichtionische organische Tenside:
   - Alkylaminalkoxylate, z.B. Polyethylenglycolcocosamin (kommerzialisiert unter den Namen VARONIC K-202 oder K-202 P oder K-205) oder Polyethylenglycolstearylamin (kommerzialisiert unter den Namen Varonic S), der allgemeinen Formel 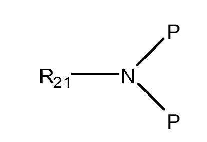
   - Amidoamine, z.B. Stearylamidopropyldimethylamin (kommerziell erhältlich unter dem Namen ADOGEN S-18 V), der allgemeinen Formel 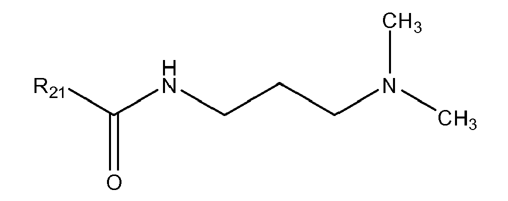
   - Alkanolamide, z.B. Diethanolamide (kommerzialisiert unter den Namen REWOMID DC212S oder REWOMID S280 oder VARAMID 70) der allgemeinen Formel 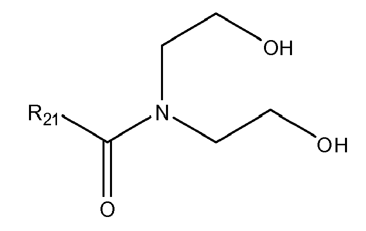
   - Ethoxylierte Monoethanolamide (kommerzialisiert unter dem Namen REWOCOROS AC 100 oder VARAMIDE T-55) der allgemeinen Formel 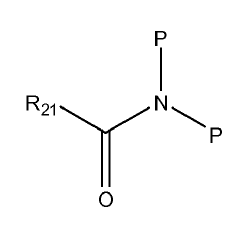
   - Alkylphosphinoxide, z.B. Dimethyldecylphosphine oxide (kommerzialisiert unter dem Namen APO 10)
   - Alkyl-N-glucamide, z.B. Octyl-N-glucamid (kommerzialisiert unter dem Namen MEGA-10)
   - Alkylglucoside, z.B. n-Nonyl-β-D-glucopyranosid **oder Octyl**-β-D-thioglucopyranosid (kommerzialisiert unter der Namensreihe AGNIQUE PG)
   - Gallensäuren, z.B. Cholansäure oder Cholsäure
   - Alkylalkoxylate, z.B. Polyethylenglycol-p-1,1,3,3-tetramethylbutyl)-phenyl ether (kommerzialisiert unter dem Namen TRITON X-100 oder Polyethylenglycol-isotridecylether (kommerzialisiert unter dem Namen GENAPOL X-080 oder TEGO Alkanol TD 6) oder Polyethylenglycolstearylether (kommerzialisiert unter dem Namen TEGO Alkanol S 2, S 10, S 20P) oder Polyethylenglycol oleylether (kommerzialisiert unter dem Namen TEGO Alkanol O 20) oder Polypropylenglycolmyristylether (kommerzialisiert unter dem Namen VARONIC APM) oder Polyethylenglycol nonylphenylether (kommerzialisiert unter dem Namen REWOPAL HV 10) oder Polyethyleneglycol polypropyleneglycol copolymere (kommerzialisiert unter dem Namen PLURONIC, z.B. F68 oder F127) der allgemeinen Formel

      R₂₁----P
   - Polyetherpolyole (kommerzialisiert zum Beispiel unter dem Namen TERGITOL L-62 E und L-62 und L-81)
   - Sorbitanester, z.B. Sorbitanmonolaurat (kommerzialisiert unter dem Namen TEGO SML) oder Sorbitantrioleat (kommerzialisiert unter dem Namen TEGO STO), der allgemeinen Formel 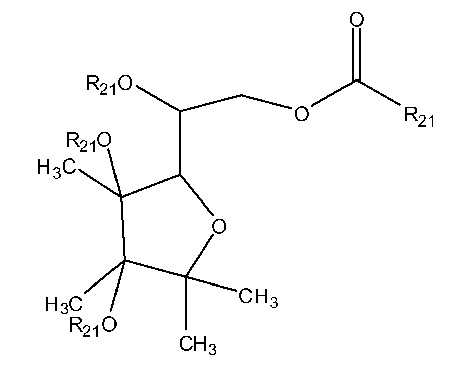
   - Sorbitanesterethoxylate, z.B. Polyoxyethylensorbitan monolaurat (kommerzialisiert unter dem Namen TEGO SML 20) oder Polyethylenglycolmonooleat (kommerzialisiert unter dem Namen TEGO SMO) oder Polyethylenglycolsorbitantristearat (kommerzialisiert unter dem Namen TEGO STS)
   - Fettalkohole, z.B. Isostearylalkohol (kommerzialisiert unter dem Namen TEGO Alkanol 66) oder Oleylalkohol (kommerzialisiert unter dem Namen TEGO Alkanol 80, 85 und 90) der allgemeinen Formel

      R²¹----P
   - Fettsäureethoxylate, z.B. Polyethylenglycolstearat (kommerzialisiert unter dem Namen TEGO Acid S) oder Polyethylenglycololeat (kommerzialisiert unter dem Namen AROSURF 8-190 oder REWOPAL EO 70) der allgemeinen Formel 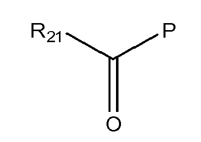
   - Esteröle, z.B. Isopropylpalmitat (kommerzialisiert unter dem Namen TEGOSOFT P) oder Ethylhexylpalmitat (TEGOSOFT OP) der allgemeinen Formel 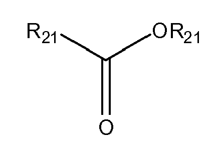
   - Esterethoxylate, z.B. Polyethylenglycolglyceryllaurat (kommerzialisiert unter dem Namen TAGAT L2) oder Polyethylenglycolglyceryloleoricinolat (kommerzialisiert unter dem Namen TAGAT V20) oder Polyethylenglycolglycerylcocoat (kommerzialisiert unter dem Namen Varonic LI)
   - Organomodifizierte Siloxane, beispielsweise: Polyethersiloxane, z.B. kommerzialisiert unter der Namensreihe TEGOPREN oder der Namensreihe TEGO WET.

Besonders geeignete Polyethersiloxanderivate sind solche der folgenden allgemeinen Formel (XVIII): 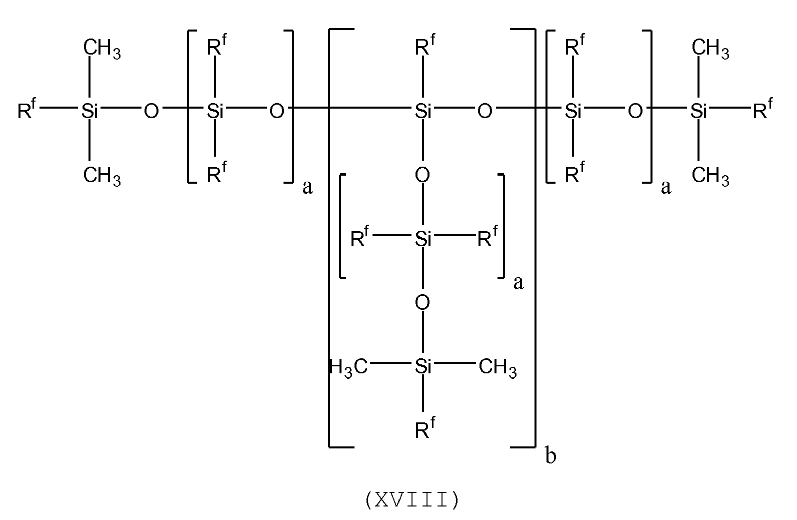 wobei der Rest
- R^{f}: der Rest R¹ sein kann, wobei
- R¹: ein Alkylrest mit 1 bis 4 C-Atomen, oder ein Arylrest ist,
oder
- R^{f}: der Rest R² oder R³ ist, mit der Maßgabe, dass mindestens ein Rest R^{f} der Rest R² ist, wobei
- R² und R³: unabhängig voneinander Polyetherreste der Formel (XIX)

(F)_{q}(O(c₂H_{4-d}R^{'}_{d}O) ₘ(CHₓH₂ₓO) rZ)_{w} (XIX)
sind, mit der Bedeutung
- d: 1 bis 3
- m: > 1
- q: 0 oder 1
- x: 2 bis 10
- r: > 1
- w: 1 bis 4
- F: ein Kohlenwasserstoffrest, der auch verzweigt sein kann,
- R': ein Wasserstoffrest, ein einwertiger Kohlenwas serstoffrest mit 1 bis 18 C-Atomen
- Z: ein H-Atom oder ein einwertiger organischer Rest wie Alkyl oder Alkyl- oder Arylester ist,
und wobei in Formel (XIII)
- b: eine Zahl von 0 bis 8 ist,
- a: eine Zahl von 1 bis 100 ist, wenn b eine Zahl von 6 bis 8 ist,
- a: eine Zahl von 1 bis 200 ist, wenn b eine Zahl von 3 bis 6 ist,
- a: eine Zahl von 1 bis 300 ist, wenn b eine Zahl von 0 bis 3 ist.

Die Werte von a und b sind als durchschnittliche Werte zu verstehen, da die erfindungsgemäß mitverwendeten Siliconpolyether-Copolymere in Form von Regelfalläquilibrierten Gemischen vorliegen.
Die Reste R1 sind Alkylreste mit 1 bis 4 Kohlenstoffatomen, wie Methyl-, Ethyl-, Propyl- oder Butylreste, oder Arylreste, wobei die Phenylreste bevorzugt sind. Herstellungs- und preisbedingt sind die Methylreste bevorzugt, so dass mindestens 80 % der Reste R1 Methylreste sind. Besonders bevorzugt sind solche Polysiloxane, bei denen alle Reste R1 Methylreste sind.

Das Siloxangemisch kann geradkettig (b = 0) oder verzweigt sein (b > 0 bis 8). Der Wert von a kann erfahrungsgemäß nur in der angegebenen Weise mit Werten von b kombiniert werden, da ansonsten die erhöhte Viskosität eine Handhabung unmöglich macht.
Besonders bevorzugte Siliconpolyether-Copolymere sind solche der allgemeinen Formel (XX) 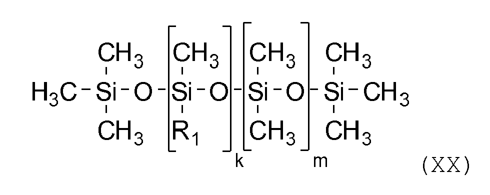 worin
- m =: 0 bis 30,
- k =: 1 bis 5,
- R¹: ein Allylalkohol oder Alkyl-gestarteter Poly-ether, welcher mit 1 bis 10 Ethylenoxidmolekülen und zwischen 1 und 25 Propylenoxidmolekülen umgesetzt ist,
bedeutet
- Funktionalisierte Polyethersiloxane, z.B. kommerzialisiert unter dem Produktnamen TEGOPREN 7100
- Blockweise aufgebaute Polyethersiloxane

Geeignete Polyethersiloxane sind Strukturen der Formel (XXI) 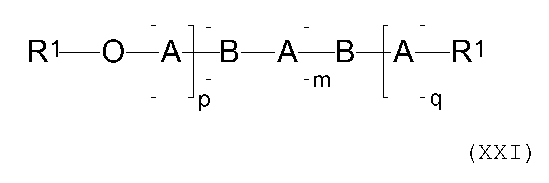 wobei der Rest
- A: ein Polyoxyalkylenblock der durchschnittlichen Formel (XXII) ist,

[ (C₂H_{4-d}R^{'}_{d}O)ₙ(CₓH₂ₓO) ᵣ(C₂H_{4-d}R^{"}_{d}Oₜ] (XXII)

wobei
- d: 1 bis 3,
- n: ≥ 0,
- x: 2 bis 10,
- r: ≥ 0,
- t: ≥ 0,
n + r + t ≥ 1,
sind und
- R': ein einwertiger aromatischer gegebenenfalls substituierter Kohlenwasserstoffrest,
- R": ein Wasserstoffrest oder ein einwertiger Kohlenwasserstoffrest mit 1 bis 18 C-Atomen,
- R¹: ein H-Atom, ein einwertiger organischer linearer oder verzweigter Alkylrest mit der Kettenlänge C₁-C₄₀ oder ein Carboxyrest eines gegebenenfalls verzweigten Alkyl- oder Arylesters ist,
- B: ein Polysiloxanblock der durchschnittlichen Formel (XXIII) ist, 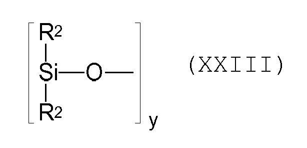
wobei
- R²: gleich oder verschieden ist und einen Alkylrest mit 1 bis 4 Kohlenstoffatomen oder einen Phenylrest umfasst und
- y: einen Wert von 5 bis 200,

- m: einen Wert von 2 bis 100,
- p: einen Wert von 0 oder 1 und
- q: einen Wert von 0 oder 1,
hat,
oder der Formel (XXVI) 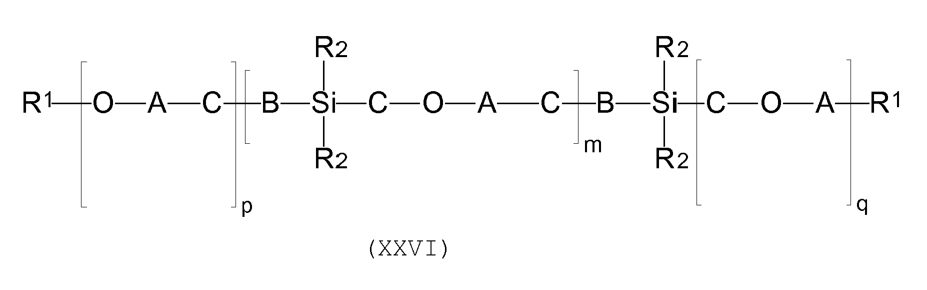 wobei die Reste
- R¹,: A, B und m, p und q die oben genannte Bedeutung haben und
- C: ein linearer oder verzweigter Alkylenrest mit 2 bis 20 Kohlenstoffatomen ist.

Die Verbindungen der angegebenen Strukturen liegen als statistische Mischungen vor, daher entsprechen die angegebenen Indexzahlen den zahlenmäßigen Mittelwerten der Mischungen.

### 2. Kationische Tenside:

- Tetraalkylammoniumsalze, z.B. Cetyltrimethylammoniumbromid
- Alkylpyridiniumsalze, z.B. Cetylpyridinium chlorid
- Esterquats, z.B. kommerziell erhältlich unter den Namen REWOQUAT WE 15, VARISOFT WE 16 oder REWOQUAT WE 38 DPG, der allgemeinen Formel 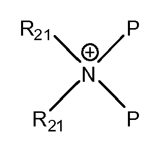 mit R20 = Acetyl
- Diamidoaminquats, z.B. kommerziell erhältlich unter den Namen VARISOFT 110-75 [N,N-bis(hydrotalgamidoethyl)-N-polyethoxy-N-methylammoniummethylsulfat], VARISOFT 222 LT-90 [N, N-bis(oleylamidoethyl)-N-polyethoxy-N-methylammoniummethylsulfat], oder REWOQUAT WE 38 DPG oder VARIQUAT 238-90 [N,N-bis(talgamidoethyl)-N-polypropoxy-N-methylammoniummethylsulfat], der allgemeinen Formel 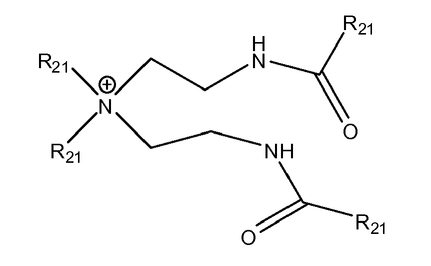
- Imidazoliniumquats, z.B. kommerziell erhältlich unter den Namen REWOQUAT W 90, VARIQUAT 55 oder REWOQUAT W3690
- Alkoxyalkylquats, z.B. kommerziell erhältlich unter dem Namen VARIQUAT 638 [N-Methyl-N,N-bis(2-hydroxyethyl)-N-cocosammoniumchlorid
- Benzylquats, z.B. kommerziell erhältlich unter den Namen VARIQUAT 80 MC [Dimethylalkyl(C12-C16)benzylammoniumchlorid und VARIQUAT SDAC [Dimethylstearylbenzylammoniumchlorid], der allgemeinen Formel 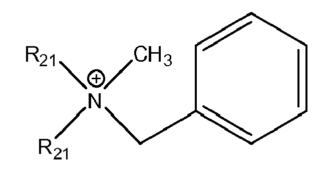
- Silikonquats, z.B. kommerziell erhältlich unter den Namen TEGOPREN 6921 [Diquaternäres Polydimethylsiloxan], TEGOPREN 6924 [Diquaternäres Polydimethylsiloxan] und TEGOPREN 7990 [Diquaternäres Polyetherpolydimethylsiloxan].

### 3. Amphotere Tenside:

- Betaine, z.B. 3-[N,N-Dimethyl(3-myristoylamino-propyl)ammonio]propansulfonat (kommerziell erhältlich unter dem Namen Amidosulfobetaine-14) oder 1-(3-Sulfopropyl)pyridinium betain oder 3-Dodecyl-dimethylammonio-propan-1-sulfonate (kommerziell erhältlich unter dem Namen ZWITTERGENT 3-12) oder 3-[(3-Cholamido-propyl)dimethylammonio]-1-propansulfonate (kommerzialisiert unter dem Namen CHAPS) oder Laurylbetain (kommerzialisiert unter dem Namen REWOTERIC AM DML-35) oder Cocamidopropylbetain (kommerzialisiert unter dem Namen TEGO Betain F 50 oder L 7) Alkylglycine, z.B. n-Dodecyl-N,N-dimethylglycin (kommerzialisiert unter dem Namen EMPIGEN BB) oder Talgglycin (kommerzialisiert unter dem Namen Rewoteric AM TEG), der allgemeinen Formel 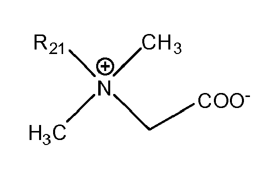
- Sultaine, z.B. Cocamidopropylhydroxysultain (kommerzialisiert unter dem Namen REWOTERIC AM CAS), der allgemeinen Formel 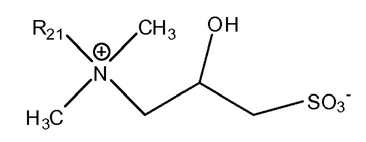
- Amphopropionate, z.B. Cocoamphoproprionat (kommerzialisiert unter dem Namen REWOTERIC AM KSF 40), der allgemeinen Formel 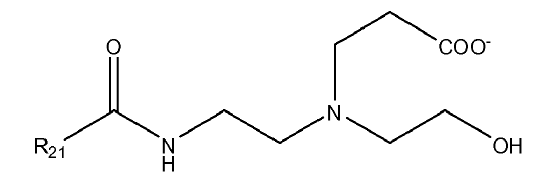
- Amphoacetate, z.B. Natrium cocoamphoacetat (kommerzialisiert unter dem Namen REWOTERIC AM C), der allgemeinen Formel 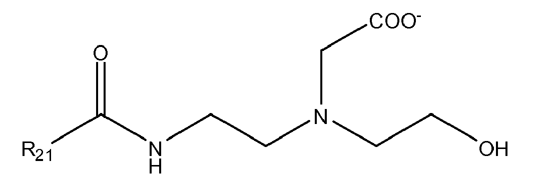
- Aminoxide, z.B. cocamidopropyldimethylaminoxid (kommerzialisiert unter dem Namen VAROX 1770), der allgemeinen Formel 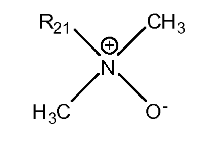
- Siliconbetaine, z.B. kommerzialisiert unter dem Namen TEGOPREN 6950.

### 4. Perfluorierte Tenside:

- Perfluorierte Alkylsulfonate, z.B. Perfluorooctansulfonat (PFOS)
- Perfluorierte Carbonsäuren, z.B. Perfluorooctansäure (PFOA)
- Fluortelomeralkohole.

### 5. Geminitenside:

- Acetylendiole, z.B. kommerzialisiert unter dem Namen SURFYNOL 104
- Acetylendiolalkoxylate, z.B. kommerzialisiert unter dem Namen SURFYNOL 400 oder SURFYNOL 2502
- Acetylenglycole, z.B. kommerzialisiert unter dem Namen DYNOL 604
- Alkandiole, Alkandicarbonsäuren und deren Ester, z.B. kommerzialisiert unter dem Namen ENVIROGEM AD01, ENVIRONGEM AE01, ENVIRONGEM AE02 und ENVIRONGEM AE03
- ENVIRONGEM 360
- Bispyridiniumalkane, wie zum Beispiel 1,4-bis(α-octylpyridinium)butandibromid oder 1,4-bis(α-dodecylpyridinium)butandichlorid
- Siloxanbasierte Geminitenside, wie in der EP A1-1 382 632 beschrieben. z.B. kommerzialisiert unter dem Namen TEGO TWIN 4000. Der Inhalt der EP-A1-1 382 632 ist in seiner Gesamtheit als Bestandteil dieser Offenbarung anzusehen.

Bevorzugt enthalten die erfindungsgemäßen Zusammensetzungen als Performance-Addtiv ein oder mehrere nichtionisches Tenside, besonders bevorzugt ein oder mehrere organomodifizierte Siloxane, besonders bevorzugt ein oder mehrere Polyethersiloxane und insbesondere Polyethersiloxane der Formel (XVIII).

Eingetragene Warenzeichen sind in Großbuchstaben wiedergegeben. Warenzeicheninhaber sind:

TEGO TEGOSURF AROSURF REWOQUAT VARONIC ADOGEN REWOMID VARAMID REWOCOROS REWOPAL sind Warenzeichen der Evonik Goldschmidt GmbH
SURFYNOL, DYNOL, ENVIROGEM sind Warenzeichen der Air Products, Inc.
AGNIQUE ist Warenzeichen der Cognis
TRITON ist Warenzeichen der DOW Chemical Company
GENAPOL ist Warenzeichen der Clariant
PLURONIC ist Warenzeichen der BASF AG
EMPIGEN ist Warenzeichen der Albright&Wilson
VAROX ist Warenzeichen der R.T. Vanderbilt
ZWITTERGENT ist Warenzeichen der Calbiochem-Novachem

Die oben genannten Performanceadditive können allein oder in beliebigen Gemischen miteinander zusammen mit den ionischen Flüssigkeiten eingesetzt werden. Weitere übliche Lösungsmittel, Zusatzstoffe und Additive können ebenfalls beigemischt sein oder werden.

Beispiele fester Oberflächen sind Glas, Metall, Halbleiter, Polymere, Keramik, Stein und Leder und aus diesen Stoffen bestehende Gewebe oder Membranen.

Beispiele für Metalloberflächen sind Oberflächen aus Aluminium, Chrom, Nickel, Magnesium, Titan, Vanadium, Eisen, Kupfer, Zink, Cobalt, Gallium, Germanium, Zirkonium, Molybdän, Palladium, Silber, Zinn, Wolfram, Platin, Gold, Blei und deren Legierungen, auch mit anderen Elementen wie Kohlenstoff, insbesondere Stahl. Ein Beispiel für eine Stahloberfläche ist eine Oberfläche aus S235JRG2-Stahl.

Beispiele für Halbleiteroberflächen sind Oberflächen aus Silizium und Titandioxid.

Beispiele für Polymeroberflächen sind Oberflächen aus natürlichen oder künstlichen Thermoplasten, Duroplasten und Elastomeren. Beispiele für Kunststoffoberflächen sind Polyacrylate wie beispielsweise Polymethylmethacrylat, Polyacrylnitril, Polyacrylsäure, Polyvinylhalogenide wie beispielsweise Polyvinylchlorid, Polyvinylalkohol, Polyethylen, Polypropylen, Polybutadien, Polyacrylnitril Polyether, Polysulfide, Polysulfone, Polyethersulfon, Polyketone, Polyester, Polycarbonate, Polystyrol, Formaldehydharze, Epoxidharze, Polyamide, Polyharnstoffe, Polyurethane, Polyimide, Polyphenole, Polypyrrole, Polyfuran, Polythiophen, Polybenzimidazole, Polyamine, Polyanhydride, Polytetrafluorethylen, Polyvinylidenfluorid, Polylactate, Polysiloxane, Polysilane, deren Copolymere und Blends und deren Gemische oder CoPolymere, Oligomere und Block-(Co)-Polymere. Natürliche Polymere sind Kautschuk, Lignin, Polysaccharide, Polyhydroxybuttersäure, und Proteine.

Beispiele für Keramikoberflächen sind Oberflächen aus Ton, Kaolin, Tonmineralien, Aluminiumoxid, Berylliumoxid, Zirkonoxid, Siliziumcarbid, Siliziumnitrid, Aluminiumnitrid, Bornitrid, Borcarbid.
Von den festen Oberflächen sind insbesondere Membranoberflächen bevorzugt.

Ebenfalls Erfindungsgegenstand ist die Verwendung der Zusammensetzungen enthaltend eine oder mehrere ionische Flüssigkeiten und ein oder mehrere Performance-Additive, sowie weitere Zusatz- und/oder Hilfsstoffe, wobei die Zusammensetzung einen Kontaktwinkel mit der behandelten Oberfläche besitzt, der mindestens 10°, bevorzugt 20°, besonders bevorzugt 30° und ganz besonders bevorzugt 40° kleiner ist als er ohne den Zusatz des Performance-Additivs ist.

Ebenfalls Gegenstand der Erfindung ist die Verwendung in einem Verfahren zur Benetzung fester Oberflächen durch ionische Flüssigkeiten, bevorzugt einer optimierten Benetzung durch den Zusatz des Performance-Additivs, besonders bevorzugt ist hierbei die benetzte Fläche mindestens um 30 %, bevorzugt 50 %, besonders bevorzugt 80% und ganz besonders bevorzugt 100 % größer als ohne den Zusatz des Performance-Additivs. Damit einher geht auch die Vergrößerung des Durchmessers der benetzten Fläche, der ebenfalls um mindestens 50 % größer ist als der Durchmesser der benetzten Fläche ohne den Zusatz des Performance-Additivs.

Die Mischungsverhältnisse aus Ionischer Flüssigkeit und Performance Additiv betragen zwischen 100.000:1 und 1:10.000, bevorzugt zwischen 10.000:1 und 1:1, besonders bevorzugt 10.000:1 und 10:1, ganz besonders bevorzugt zwischen 1.000:1 und 100:1.

Die Mischungen können weitere Lösungsmittel enthalten, insbesondere organische Lösungsmittel und/oder Wasser. Bevorzugte organische Lösungsmittel sind aliphatische, cycloaliphatische, aromatische, heterocyclische, heteroaromatische gegebenenfalls substituierte Alkohole, Aldehyde, Ketone, Carbonsäureester, Carbonsäureamide, Carbonsäureanhydride, Carbonate, Carbamate, Nitrile, Ether, Polyether, Alkane, Alkene, halogenierte Kohlenwasserstoffe, Thiole, Thioether, Thioester, Aminosäuren, Polyole, Sulfone, Sulfoxide, Harnstoffe, und Thioharnstoffe.

Der Anteil des Lösungsmittels an der Gesamtmischung beträgt zwischen 99,9 % und 0,01 %, bevorzugt zwischen 50 % und 0,05 %, besonders bevorzugt zwischen 25 % und 0,1 % und ganz besonders bevorzugt zwischen 10 % und 0,5 %.

Die Mischungen können auch mit Vorteil für eine Vielzahl anderer chemisch-technischer Prozesse eingesetzt werden, so generell in der metallverarbeitenden Industrie, beispielsweise in Kühlschmierstoffen, Härteölen, Hydraulikölemulsionen, Polierpasten, Formtrennmitteln, Ziehölen, Beizmitteln, oder Metallreinigern.

Weiterhin können die erfindungsgemäßen Mischungen in der Leder-, Papier-, Druck-, Galvano- und Photoindustrie verwendet werden.

Weiterhin können die Mischungen bei der Wasserbehandlung, beispielsweise bei der Abwasserreinigung, verwendet werden.

Weiterhin können die Mischungen in Pflanzenschutzformulierungen eingesetzt werden.

Die Tenside können sowohl allein oder in Mischungen miteinander eingesetzt werden und weitere Zusatz- und Hilfsstoffe enthalten, die je nach Anwendungszweck gezielt ausgewählt sein können.

Weitere Gegenstände der Erfindung sind durch die Ansprüche gekennzeichnet, wobei der Offenbarungsgehalt der Ansprüche vollumfänglich Teil der Offenbarung der Beschreibung ist.

Die erfindungsgemäßen Performanceadditive und deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können.

### Ausführungsbeispiele:

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt gelesen werden kann.

### Versuchsdurchführung:

8 g ionische Flüssigkeit (IL) wurde vorgelegt und 0,04 g des Performance-Additivs hinzugewogen. Die Probe wurde mit dem Spatel verrührt, bis sie homogen war und anschließend wurden 50 µl auf eine PP-Folie pipettiert. Die max. Spreitung nach 5 min wurde bestimmt. Der Durchmesser (D) des entstandenen Kreises wird in mm bestimmt. Je höher der gemessene Wert ist, desto stärker ist die Spreitung und Benetzung und damit die Wirkung des erfindungsgemäßen Performance-Additivs.

**Tabelle 1:**

| Benetzungsverhalten/Spreitverhalten von ionischen Flüssigkeiten (Spreitung nach 5 Minuten gemessen)Die Konzentration ergibt sich aus der Versuchsdurchführung oben. Die Messungen wurden bei Raumtemperatur durchgeführt | | | | | | | | |
|---|---|---|---|---|---|---|---|---|
| TENSID /IL | EMIM ES | Flächen zunahme | IL 1 | Flächen zunahme | EMIM Ac | Flächen zunahme | EMIM DCA | Flächenzunahme |
| | D in mm | in % | D in mm | in % | D in mm | in % | D in mm | In % |
| | | | | | | | | |
| Blindwert (reine IL) | 6 | | 4 | | 7 | | 6 | |
| | | | | | | | | |
| TEGO WET KL 245 | 14 | 440,0 | 5 | 56,0 | 12 | 190,0 | 10 | 180,0 |
| | | | | | | | | |
| TEGO Wet 505 | 10 | 177,8 | 8 | 300,0 | 10 | 100,0 | | |
| | | | | | | | | |
| TEGO Twin 4000 | 20 | 1011,1 | 11 | 650,0 | 22 | 890,0 | 18 | 800 |
| | | | | | | | | |
| TEGOPREN 5878 | | | 8 | 300,0 | 9 | 66,0 | 8 | 79 |
| | | | | | | | | |
| TEGO STO 85 V | | | | | 10 | 100,0 | | |

| | | | | | | | | |
|---|---|---|---|---|---|---|---|---|
| EMIM = 1-Ethyl-3-methylimidazolium ES = Ethylsulfat Ac = Acetat DCA = Dicyanamid IL1 = Bis-(hydroxyethyl)dimethylammonium methansulfonat IL2 = Ethyltributyl phoshophonium diethylphosphat TEGO Wet KL 245 = Polyethermodifiziertes Polysiloxan (CAS-Nr. 134180-76-0) TEGO WET 505 = Alkylalkoxylat (CAS-Nr. 303152-49-0) TEGO Twin 4000 = Polyethermodifiziertes Polysiloxan (CAS-Nr. 780769-22-4) TEGOPREN 5878 = Polyethermodifiziertes Polysiloxan (CAS-Nr. 27306-78-1) TEGO STO 85 V = Polyoxyethylen(20)sorbitantrioleat (CAS-Nr. 9005-70-3) | | | | | | | | |

Er wird deutlich, dass der Zusatz des Performance-Additivs zu einem deutlichen Anstieg der benetzten Oberfläche führt. Der Durchmesser der Benetzungsfläche ist in jedem beispielhaft belegten Fall um mehr als 50 % größer als der Durchmesser der Benetzungsfläche ohne das Performance-Additiv. Die Benetzungsfläche selbst ist verhältnismäßig sogar noch wesentlicher angestiegen.

Der Kontaktwinkel gegenüber Polypropylen-Folie (PP-Folie) der gemessenen Ionischen Flüssigkeiten verändert sich deutlich nach der Zugabe der Performance Additive.
Der Kontaktwinkel ist ein Maß für die Spreitungseigenschaften der Performance-Additive. Das Spreitungsvermögen ist umso höher, je niedriger der Kontaktwinkel ist (in der nachfolgenden Tabelle höherer Bereichswert.

Die eingesetzten Formulierungen wurden der oben beschriebenen Versuchsdurchführung entsprechend hergestellt und die Kontaktwinkel wurden mittels Pendant Drop Tensiometer OCA 35 von dataphysics gemessen.

**Tabelle 2 - Spreitungsvermögen von ionischen Flüssigkeiten unter Zusatz eines Performance-Additivs. Die Konzentrationen ergeben sich aus der Versuchsdurchführung. Die Messtemperatur ist Raumtemperatur.**

| TENSID/IL | EMIM ES | IL 1 | EMIM AC | EMIMDCA | 3 HC 14 P DCA | IL 2 |
|---|---|---|---|---|---|---|
| | | | | | | |
| Blindwert | 2 | 1 | 3 | 3 | 6 | 6 |
| | | | | | | |
| TEGO WET 505 | 6 | 4 | 6 | | | |
| | | | | | | |
| TEGO TWIN 4000 | 9 | 9 | 9 | 9 | 9 | 9 |
| | | | | | | |
| TEGOPREN 5878 | | | 6 | 6 | | |
| | | | | | | |
| TEGO STO 85 V | | | 6 | 6 | | |
| | | | | | | |
| TEGO Wet KL 245 | 8 | 4 | | | | |

| | | | | | | |
|---|---|---|---|---|---|---|
| 3 HC 14 P DCA = Trihexyltetradecylphosphoniumdicyanamid | | | | | | |

Zur Beurteilung des Kontaktwinkels wurden folgende Bereiche festgelegt:

**Tabelle 3 - Bereichswerte**

| Kontaktwinkel in [°] | Bereich |
|---|---|
| > 90 | 1 |
| 80 - 89 | 2 |
| 70 - 79 | 3 |
| 60 - 69 | 4 |
| 50 - 59 | 5 |
| 40 - 49 | 6 |
| 30 - 39 | 7 |
| 20 - 29 | 8 |
| < 20 | 9 |

Dadurch ergibt sich, dass eine Kontaktwinkeldifferenz von mindestens 20° vorliegt, wenn mindestens 3 Wertebereiche zwischen den angegebenen Bereichswerten liegen.

Weiterhin wurden Mischungen aus einer ionischen Flüssigkeit und den erfindungsgemäßen PerformanceAdditiven auf eine Glasplatte aufgerakelt und die Benetzungseigenschaften bzw. die Filmbildung der Produkte überprüft.
Dafür wurden 8 g der ionischen Flüssigkeit vorgelegt und zwischen 0,04 g und 0,08 g des Performance-Additves zugewogen. Die Produkte wurden mit dem Spatel verrührt, bis sie eine homogene Mischung ergeben. Das Aussehen der Mischungen wird beurteilt und in der Tabelle angegeben.
Eine Glasplatte wurde vorbereitet, indem sie mit Wasser und Reinigungsmittel vorgereinigt wurde, anschließend unter fließendem Wasser gereinigt und mit Ethanol fettfrei gemacht wurde. Diese Glasplatte wurde auf eine waagerechte Unterlage gelegt und das Kastenrakel wurde an ein Ende der Glasplatte gestellt. Ein Teil der Flüssigkeit wurde in das Rakel gegeben, welches in einem Zug über die Glasplatte gezogen wurde. Die aufgerakelte Schicht sollte nicht mehr als 50 µm betragen. Direkt im Anschluss wurde die gebildete Schicht beurteilt.
Hierbei wurde die Anzahl der Krater gezählt.
Die Ergebnisse zeigen, dass die Anzahl der Krater durch die Zugabe des Performanceadditivs im Vergleich zum Blindwert signifikant reduziert wurde. Somit verbessert die Zugabe eines Performanceadditivs die Benetzungseigenschaften der Ionischen Flüssigkeiten.

## Patentansprüche

1. Zusammensetzung zur dauerhaften Benetzung fester Oberflächen enthaltend mindestens eine ionische Flüssigkeit und mindestens ein Performanceadditiv und gegebenenfalls Lösungsmittel und/oder weitere sonstige Hilfs- oder Zusatzstoffe.

2. Zusammensetzung nach Anspruch 1, **dadurch gekennzeichnet, dass** als Performanceadditive ein Netzmittel oder Spreitungsmittel verwendet wird.

3. Zusammensetzung nach einem der Ansprüche 1 oder 2, **dadurch gekennzeichnet, dass** die Zusammensetzung einphasig ist.

4. Zusammensetzung nach zumindest einem der Ansprüche 1 bis 3, **dadurch gekennzeichnet, dass** als Performanceadditive ein oder mehrere Tenside verwendet werden.

5. Zusammensetzung nach Anspruch 4, **dadurch gekennzeichnet, dass** das oder die Tenside ausgewählt sind aus der Gruppe der nichtionischen Tenside, kationischen Tenside, amphoteren Tenside, oder perfluorierten Tenside, allein oder deren Mischungen.

6. Zusammensetzung nach zumindest einem der Ansprüche 1 bis 5, **dadurch gekennzeichnet**, das als Lösungsmittel organische Lösungsmittel oder Wasser und/oder deren Mischungen verwendet werden.

7. Zusammensetzung nach Anspruch 6, **dadurch gekennzeichnet, dass** das Lösungsmittel ein organisches Lösungsmittel ist.

8. Zusammensetzung nach Anspruch 5, **dadurch gekennzeichnet, dass** als nichtionisches Tensid ein organomodifiziertes Siloxan verwendet wird.

9. Zusammensetzung nach Anspruch 8, **dadurch gekennzeichnet, dass** das organomodifizierte Siloxan ein Polyethersiloxan ist.

10. Zusammensetzung nach Anspruch 9, **dadurch gekennzeichnet, dass** als Polyethersiloxan Verbindungen der allgemeinen Formel (XVIII) verwendet werden 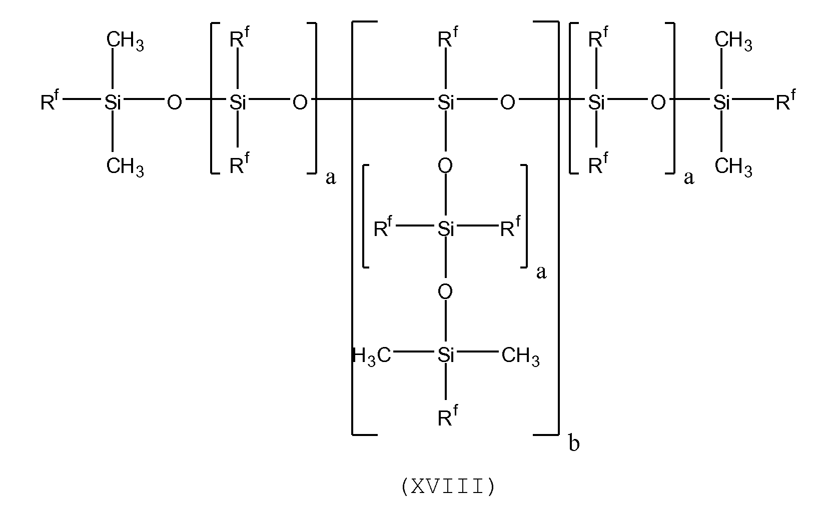 wobei der Rest
R^{f} der Rest R¹ sein kann, wobei
R¹ ein Alkylrest mit 1 bis 16 C-Atomen, oder ein Arylrest ist,
oder
R^{f} der Rest R² oder R³ ist, mit der Maßgabe, dass mindestens ein Rest R^{f} der Rest R² ist, wobei
R² und R³ unabhängig voneinander Polyetherreste der Formel (XIX)
(F)_{q}(O(C₂H_{4-d}O)ₘ(CₓH_{2X}O) ᵣZ)_{w} (XIX)
sind, mit der Bedeutung
d 1 bis 3,
m > 1,
q 0 oder 1,
x 2 bis 10,
r > 1,
w 1 bis 4,
F ein Kohlenwasserstoffrest, der auch verzweigt sein kann,
R' ein Wasserstoffrest, ein einwertiger Kohlenwas serstoffrest mit 1 bis 18 C-Atomen,
Z ein H-Atom oder ein einwertiger organischer Rest wie Alkyl oder Alkyl- oder Arylester ist,
und wobei in Formel (XVIII)
b eine Zahl von 0 bis 8 ist,
a eine Zahl von 1 bis 100 ist, wenn b eine Zahl von 6 bis 8 ist,
a eine Zahl von 1 bis 200 ist, wenn b eine Zahl von 3 bis 6 ist,
a eine Zahl von 1 bis 300 ist, wenn b eine Zahl von 0 bis 3 ist.

11. Zusammensetzung nach zumindest einem der Ansprüche 1 bis 10, **dadurch gekennzeichnet, dass** die Zusammensetzung einphasig ist.

12. Verwendung einer Zusammensetzung nach zumindest einem der Ansprüche 1 bis 11, **dadurch gekennzeichnet, dass** ein Kontaktwinkel von mindestens 10° kleiner als ohne das Performanceadditiv erreicht werden kann.

13. Verwendung der Zusammensetzungen nach einem der Ansprüche 1 bis 11, in einem Verfahren zur Benetzung von festen Oberflächen durch ionische Flüssigkeiten.

14. Verwendung nach Anspruch 13, **dadurch gekennzeichnet, dass** die benetzte Fläche um mindestens 30 % größer ist als ohne Additiv.

15. Verwendung nach den Ansprüchen 12 bis 14, **dadurch gekennzeichnet, dass** die Oberfläche aus Glas, aus einem Metall oder einer Metalllegierung, aus Keramik, aus Papier, aus Halbleitern, aus Polymeren, aus Stein oder aus Leder besteht.
